# EUROPEAN PATENT APPLICATION

(11) **EP 4 622 330 A1**
(43) Date of publication of application: **24.09.2025**
(21) Application number: 23909820.5
(22) Date of filing: 23.11.2023
(51) Int. Cl.: H04W 24/10

(54) **COMMUNICATION METHOD AND APPARATUS**

(30) Priority: 26.12.2022 CN 202211686203; 31.10.2023 CN 202311438516
(71) Applicant: Huawei Technologies Co., Ltd., Shenzhen, Guangdong 518129 (CN)
(72) Inventor: LI, Jie, Shenzhen, Guangdong 518129 (CN); ZHENG, Lili, Shenzhen, Guangdong 518129 (CN); PENG, Wenjie, Shenzhen, Guangdong 518129 (CN)
(74) Representative: Gill Jennings & Every LLP
(86) International application number: PCT/CN2023/133673
(87) International publication number: WO 2024/139888

(57) **Abstract**

A communication method and apparatus are provided. The method is as follows: A terminal device may receive first information from a network device, where the first information is used to reconfigure a trigger condition of a measurement reporting event of the terminal device. After the trigger condition is reconfigured based on the first information, the terminal device may retain a part or all of cells in a first list, or retain identification information of each cell in a first list. According to the method, when the network device reconfigures the trigger condition of the measurement reporting event for the terminal device, the terminal device may retain the part or all of the cells in the first list, or quickly measure a cell in the first list based on the retained identification information of each cell in the first list, so that information related to the first list can be effectively managed, and reporting time of a measurement report can be reduced.

## Description

### CROSS-REFERENCE TO RELATED APPLICATIONS

This application claims priority to Chinese Patent Application No. 202211686203.1, filed with the China National Intellectual Property Administration on December 26, 2022 and entitled "COMMUNICATION METHOD AND APPARATUS", which is incorporated herein by reference in its entirety; and this application claims priority to Chinese Patent Application No. 202311438516.X, filed with the China National Intellectual Property Administration on October 31, 2023 and entitled "COMMUNICATION METHOD AND APPARATUS", which is incorporated herein by reference in its entirety.

### TECHNICAL FIELD

This application relates to the field of communication technologies, and in particular, to a communication method and apparatus.

### BACKGROUND

An uncrewed aerial vehicle (uncrewed aerial vehicle, UAV) is briefly referred to as a drone, and is an uncrewed aircraft with autonomous power. Because the drone has characteristics such as flexibility and convenience, the drone is more widely used currently. In addition, the drone can communicate with a mobile communication system, so that a movement range, reliability, safety, and the like of the drone can be improved.

To manage mobility of a terminal device, the 3GPP defines conventional handover and conditional handover for the terminal device. The conventional handover is mainly to implement handover of the terminal device via a measurement reporting procedure. Specifically, the measurement reporting procedure includes: A network device sends measurement configuration information to the terminal device (for example, a drone). The measurement configuration information includes information about configuration that needs to be performed by the terminal device during measurement, for example, a measurement gap, a measurement event trigger threshold, and a quantity of triggering cells (NumberOfTriggeringCells). If the terminal device detects, through measurement, that a layer 3 filtering result of a cell within time to trigger (Time To Trigger, TTT) always satisfies a corresponding trigger condition, the terminal device adds the cell to a list of triggered cells (cellsTriggeredList). When a quantity of cells in the list of triggered cells is greater than or equal to the quantity of triggering cells, the terminal device may send a measurement report to the network device.

In the conventional technology, a method for effectively managing information related to a measurement report is urgently needed.

### SUMMARY

This application provides a communication method and apparatus, to effectively manage information related to a measurement report.

According to a first aspect, this application provides a communication method. The method may be performed by a first apparatus. The first apparatus may be a terminal device, a chip or a chip system disposed in the terminal device, or another component configured to implement a function of the terminal device. The following uses an example in which the first apparatus is a terminal device for description. The method includes: The terminal device may receive first information from a network device, where the first information is used to reconfigure a trigger condition of a measurement reporting event of the terminal device. After the trigger condition is reconfigured based on the first information, the terminal device may retain a part or all of cells in a first list, or the terminal device retains identification information of each cell in a first list. The first list includes a cell that satisfies the trigger condition.

According to the method, in a solution, when the network device reconfigures the trigger condition of measurement report reporting for the terminal device, the terminal device retains the part or all of the cells in the first list, so that the first list can be effectively managed. In this way, the terminal device does not need to re-measure these cells, so that resources for measuring these cells can be saved, reporting time of a measurement report can be reduced, and a case of too late handover or even radio link interruption can be avoided.

In another solution, when the network device reconfigures the trigger condition of measurement report reporting for the terminal device, the terminal device may retain the identification information of each cell in the first list, so that information related to the first list can be effectively managed. In this way, the terminal device can quickly measure these cells in a subsequent measurement process, thereby reducing reporting time of a measurement report, and avoiding a case of too late handover or even radio link interruption.

In a possible design, the terminal device may retain the part or all of the cells in the first list based on signal quality of each cell in the first list and/or duration for which each cell in the first list is included in the first list. This design can improve validity of information in the first list.

In a possible design, the terminal device may retain, based on signal quality of each cell in the first list and/or duration for which each cell in the first list is included in the first list, a cell that satisfies a first condition in the first list.

The first condition may include at least one of the following:
signal quality of a cell is greater than a first signal quality threshold;
duration for which a cell is included in the first list is less than or equal to a first duration threshold;
duration for which a cell is included in the first list is greater than a second duration threshold;
a cell belongs to N cells with best signal quality in the first list, where N is a positive integer; and
a cell belongs to O cells in the first list that are included in the first list for shortest duration, where O is a positive integer.

In this design, a to-be-retained cell in the first list is obtained through screening based on the first condition, and implementation is easy.

In a possible design, the terminal device may receive, from the network device, information for determining the first condition. According to this design, the terminal device can conveniently obtain the first condition.

In a possible design, after retaining the identification information of each cell in the first list, the terminal device may preferentially measure a cell in the first list based on the identification information of each cell in the first list. According to this design, the terminal device can quickly measure the cell in the first list, thereby reducing reporting time of a measurement report, and avoiding a case of too late handover or even radio link interruption.

In a possible design, the terminal device may further send second information to the network device. The second information includes at least one of the following:
information indicating a height of the terminal device;
information indicating a speed of the terminal device;
information indicating a location of the terminal device;
information indicating that an antenna currently used by the terminal device changes;
information indicating that the height of the terminal device is within a first height range;
information indicating that the speed of the terminal device is within a first speed range; and
information indicating that the location of the terminal device is within a first location range.

According to this design, the terminal device may send the second information to the network device, so that the network device accordingly adjusts the trigger condition in a timely manner, thereby effectively managing measurement report reporting.

In a possible design, when the terminal device satisfies a second condition, the terminal device may send the second information to the network device. The second condition includes at least one of the following:
the height of the terminal device is within the first height range;
the speed of the terminal device is within the first speed range;
the location of the terminal device is within the first location range; and
the antenna currently used by the terminal device changes.

According to this design, the terminal device sends the second information to the network device only when the second condition is satisfied, so that transmission overheads can be reduced, and a quantity of second information received by the network device can be reduced, thereby reducing calculation overheads required by the network device to determine the first information based on the second information, and reducing energy consumption of the network device.

In a possible design, the terminal device may receive, from the network device, information for determining the second condition. According to this design, the terminal device can conveniently obtain the second condition.

In a possible design, the terminal device may send a measurement report to the network device based on the trigger condition. The measurement report includes a first indication, the first indication indicates M cells in the first list, and M is a positive integer. The M cells are cells recorded by the terminal device in the first list based on a first measurement result, and the first measurement result is a measurement result obtained before the terminal device reconfigures the trigger condition based on the first information. According to this design, the terminal device may indicate which cells are recorded in the first list based on the first measurement result, so that validity of the measurement report is improved, and the network device can accordingly perform mobility management more effectively.

In a possible design, the terminal device may receive a second indication from the network device, where the second indication indicates the terminal device to retain the part or all of the cells in the first list or retain the identification information of each cell in the first list after the terminal device receives the first information. According to this design, the terminal device may retain the part or all of the cells in the first list or retain the identification information of each cell in the first list based on an indication of the network device, so that the network device and the terminal device have consistent understandings of an action of the terminal device.

In a possible design, the trigger condition includes a quantity of triggering cells.

According to a second aspect, this application provides a communication method. The method may be performed by a second apparatus. The second apparatus may be a network device, a chip or a chip system disposed in the network device, or another component configured to implement a function of the network device. The following uses an example in which the second apparatus is a network device for description. The method includes: The network device sends first information to a terminal device, where the first information is used to reconfigure a trigger condition of a measurement reporting event of the terminal device. Then, the network device may receive a measurement report from the terminal device. The measurement report includes a first indication, the first indication indicates M cells in a first list, M is a positive integer, and the first list includes a cell that satisfies the trigger condition. The M cells are cells recorded by the terminal device in the first list based on a first measurement result, and the first measurement result is a measurement result obtained before the terminal device reconfigures the trigger condition based on the first information.

According to this method, the terminal device may indicate which cells are recorded in the first list based on the first measurement result, so that validity of the measurement report is improved, and the network device can accordingly perform mobility management more effectively.

In a possible design, the network device may further receive second information from the terminal device, and send the first information to the terminal device based on the second information. The second information includes at least one of the following:
information indicating a height of the terminal device;
information indicating a speed of the terminal device;
information indicating a location of the terminal device;
information indicating that an antenna currently used by the terminal device changes;
information indicating that the height of the terminal device is within a first height range;
information indicating that the speed of the terminal device is within a first speed range; and
information indicating that the location of the terminal device is within a first location range.

According to this design, the terminal device may send the second information to the network device, so that the network device can accordingly adjust the trigger condition in a timely manner, thereby effectively managing measurement report reporting.

In a possible design, the network device may send, to the terminal device, information for determining a second condition, where the second condition is a condition that is satisfied when the terminal device sends the second information. According to this design, the terminal device sends the second information to the network device only when the second condition is satisfied, so that transmission overheads can be reduced, and a quantity of second information received by the network device can be reduced, thereby reducing calculation overheads required by the network device to determine the first information based on the second information, and reducing energy consumption of the network device.

In a possible design, the second condition includes at least one of the following:
the height of the terminal device is within the first height range;
the speed of the terminal device is within the first speed range;
the location of the terminal device is within the first location range; and
the antenna currently used by the terminal device changes.

This design provides a plurality of possible examples of the second condition, and implementation is easy.

In a possible design, the network device may send a second indication to the terminal device. The second indication indicates the terminal device to retain a part or all of cells in the first list or clear the first list and store identification information of each cell in the first list after the terminal device receives the first information. According to this design, the terminal device may retain the part or all of the cells in the first list or retain the identification information of each cell in the first list based on an indication of the network device, so that the network device and the terminal device have consistent understandings of an action of the terminal device.

In a possible design, the trigger condition includes a quantity of triggering cells.

According to a third aspect, this application provides a communication method. The method may be performed by a third apparatus. The third apparatus may be a terminal device, a chip or a chip system disposed in the terminal device, or another component configured to implement a function of the terminal device. The following uses an example in which the third apparatus is a terminal device for description. The method includes: The terminal device may obtain a correspondence between at least one value and at least one condition. When a condition satisfied by the terminal device changes from a third condition in the at least one condition to a fourth condition in the at least one condition, the terminal device may change a quantity of triggering cells from a first value to a second value, and delete a part or all of cells in a first list. The first value is a value corresponding to the third condition in the at least one value, and the second value is a value corresponding to the fourth condition in the at least one value. The first list includes a cell that satisfies a trigger condition of a measurement reporting event of the terminal device.

According to this method, in a solution, when the terminal device changes the quantity of triggering cells from the first value to the second value, the terminal device may delete the part of the cells in the first list, so that the first list can be effectively managed. In this way, the terminal device does not need to re-measure a retained cell in the first list, so that resources for measuring these cells can be saved, reporting time of a measurement report can be reduced, and a case of too late handover or even radio link interruption can be avoided.

In another solution, when the terminal device changes the quantity of triggering cells from the first value to the second value, the terminal device may delete all of the cells in the first list, so that information related to the first list can be effectively managed. In addition, in this method, an action of the terminal device is aligned with an action of the terminal device performed when the network device reconfigures the quantity of triggering cells, so that the terminal device does not send an invalid measurement result to the network device.

In a possible design, the terminal device may delete the part or all of the cells in the first list based on signal quality of each cell in the first list and/or duration for which each cell in the first list is included in the first list. This design can improve validity of information in the first list.

In a possible design, the terminal device may delete, based on the signal quality of each cell in the first list and/or the duration for which each cell in the first list is included in the first list, a cell that satisfies a fifth condition in the first list. The fifth condition includes at least one of the following:
signal quality of a cell is less than or equal to a second signal quality threshold;
duration for which a cell is included in the first list is greater than or equal to a third duration threshold;
duration for which a cell is included in the first list is less than a fourth duration threshold;
a cell belongs to P cells with poorest signal quality in the first list, where P is a positive integer; and
a cell belongs to Q cells in the first list that are included in the first list for longest duration, where Q is a positive integer.

In this design, a to-be-deleted cell in the first list is obtained through screening based on the fifth condition, and implementation is easy.

In a possible design, the terminal device may receive, from the network device, information for determining the fifth condition. According to this design, the terminal device can conveniently obtain the fifth condition.

In a possible design, when all of the cells in the first list are deleted, the terminal device may store identification information of each cell in the first list.

Optionally, the terminal device may preferentially measure a cell in the first list based on the identification information of each cell in the first list.

According to this design, the terminal device may retain the identification information of each cell in the first list, so that information related to the first list can be effectively managed. In this way, the terminal device can quickly measure these cells in a subsequent measurement process, thereby reducing reporting time of a measurement report, and avoiding a case of too late handover or even radio link interruption.

In a possible design, the terminal device may receive, from the network device, information indicating the correspondence; or the terminal device may obtain preconfigured information indicating the correspondence. According to this design, the terminal device can flexibly obtain the information indicating the correspondence.

In a possible design, a sixth condition is any condition in the at least one condition, and the sixth condition includes at least one of the following:
a height of the terminal device is within a second height range;
a speed of the terminal device is within a second speed range;
a location of the terminal device is within a second location range; and
an antenna currently used by the terminal device belongs to a first antenna set.

This design provides a plurality of possible examples of the sixth condition, and implementation is easy.

According to a fourth aspect, this application provides a communication method. The method may be performed by a fourth apparatus. The fourth apparatus may be a terminal device, a chip or a chip system disposed in the terminal device, or another component configured to implement a function of the terminal device. The following uses an example in which the third apparatus is a terminal device for description. The method includes: The terminal device may obtain a correspondence between at least one value and at least one condition. When the terminal device satisfies any condition in the at least one condition, the terminal device may determine that a quantity of triggering cells is a value corresponding to the any condition in the at least one value.

According to this method, the terminal device can quickly and accurately determine a quantity of triggering cells suitable for a current scenario based on the correspondence between the at least one condition and the at least one value.

In a possible design, a sixth condition is any condition in the at least one condition, and the sixth condition includes: a height of the terminal device is within a second height range. This design provides a possible example of the sixth condition, and implementation is easy.

In a possible design, when the terminal device satisfies a fourth condition in the at least one condition, the terminal device may determine that the quantity of triggering cells is a second value, where the second value is a value corresponding to the fourth condition in the at least one value. Then, the terminal device may delete a part or all of cells in a first list, where the first list includes a cell that satisfies a trigger condition of a measurement reporting event of the terminal device.

In a solution, when the terminal device determines that the quantity of triggering cells is the second value, the terminal device may delete the part of the cells in the first list, so that the first list can be effectively managed. In this way, the terminal device does not need to re-measure a retained cell in the first list, so that resources for measuring these cells can be saved, reporting time of a measurement report can be reduced, and a case of too late handover or even radio link interruption can be avoided.

In another solution, when the terminal device determines that the quantity of triggering cells is the second value, the terminal device may delete all of the cells in the first list, so that information related to the first list can be effectively managed. In addition, in this solution, an action of the terminal device is aligned with an action of the terminal device performed when the network device reconfigures the quantity of triggering cells, so that the terminal device does not send an invalid measurement result to the network device.

In a possible design, if a quantity of cells in the first list is less than a first value, and the quantity of cells in the first list is greater than or equal to the second value, the terminal device deletes the part or all of the cells in the first list. The first value is a value of the quantity of triggering cells before the quantity of triggering cells is determined as the second value.

When the quantity of triggering cells changes, so that the quantity of cells in the first list changes from being less than the quantity of triggering cells to being greater than or equal to the quantity of triggering cells, if the quantity of cells in the first list does not change, the terminal device does not send a measurement report for a cell in the first cell list. According to this design, when the quantity of triggering cells changes, so that the quantity of cells in the first list changes from being less than the quantity of triggering cells to being greater than or equal to the quantity of triggering cells, the terminal device may delete the part or all of the cells in the first list. In this way, when a condition for triggering sending of a measurement report is satisfied, the terminal device may send the measurement report in a timely manner.

In a possible design, the terminal device may delete the part or all of the cells in the first list based on signal quality of each cell in the first list and/or duration for which each cell in the first list is included in the first list. This design can improve validity of information in the first list.

In a possible design, the terminal device may delete, based on the signal quality of each cell in the first list and/or the duration for which each cell in the first list is included in the first list, a cell that satisfies a fifth condition in the first list. The fifth condition includes at least one of the following:
signal quality of a cell is less than or equal to a second signal quality threshold;
duration for which a cell is included in the first list is greater than or equal to a third duration threshold;
duration for which a cell is included in the first list is less than a fourth duration threshold;
a cell belongs to P cells with poorest signal quality in the first list, where P is a positive integer; and
a cell belongs to Q cells in the first list that are included in the first list for longest duration, where Q is a positive integer.

In this design, a to-be-deleted cell in the first list is obtained through screening based on the fifth condition, and implementation is easy.

In a possible design, the terminal device may receive, from the network device, information for determining the fifth condition. According to this design, the terminal device can conveniently obtain the fifth condition.

In a possible design, when all of the cells in the first list are deleted, the terminal device may store identification information of each cell in the first list.

Optionally, the terminal device may preferentially measure the signal quality of each cell in the first list based on the identification information of each cell in the first list.

According to this design, the terminal device may retain the identification information of each cell in the first list, so that information related to the first list can be effectively managed. In this way, the terminal device can quickly measure these cells in a subsequent measurement process, thereby reducing reporting time of a measurement report, and avoiding a case of too late handover or even radio link interruption.

In a possible design, when the terminal device satisfies a fourth condition in the at least one condition, the terminal device may determine that the quantity of triggering cells is a second value, where the second value is a value corresponding to the fourth condition in the at least one value. Then, the terminal device may retain a cell in a first list, where the first list includes a cell that satisfies a trigger condition of a measurement reporting event of the terminal device.

Optionally, if a quantity of cells in the first list is greater than or equal to a first value, and the quantity of cells in the first list is greater than or equal to the second value, the terminal device may retain the cell in the first list, where the first value is a value of the quantity of triggering cells before the quantity of triggering cells is determined as the second value.

When the quantity of triggering cells changes, so that the quantity of cells in the first list is greater than or equal to the quantity of triggering cells after the change, if the quantity of cells in the first list is greater than or equal to the quantity of triggering cells before the change, the terminal device has sent a measurement report for the cell in the first list before the quantity of triggering cells changes. In this case, if the terminal device deletes a part or all of cells in the first list after the quantity of triggering cells changes, the terminal device may further need to send a measurement report for the cell in the first list, thereby causing repeated reporting. According to this design, when the quantity of triggering cells changes, so that the quantity of cells in the first list is greater than or equal to the quantity of triggering cells after the change, if the quantity of cells in the first list is greater than or equal to the quantity of triggering cells before the change, the terminal device may retain the cell in the first list. In this way, the terminal device does not send a measurement report again for the cell in the first list, so that repeated reporting can be avoided.

In a possible design, the terminal device may receive, from the network device, information indicating the correspondence; or the terminal device may obtain preconfigured information indicating the correspondence. According to this design, the terminal device can flexibly obtain the information indicating the correspondence.

According to a fifth aspect, an embodiment of this application provides a communication apparatus, including units configured to perform the steps in any one of the foregoing aspects.

According to a sixth aspect, an embodiment of this application provides a communication apparatus, including at least one processing element and at least one storage element. The at least one storage element is configured to store a program and data, and the at least one processing element is configured to read and execute the program and the data that are stored in the storage element, so that the method according to any one of the foregoing aspects of this application is implemented.

According to a seventh aspect, an embodiment of this application provides a communication system, including a network device or a terminal device.

In some examples, the network device may send first information to the terminal device, where the first information is used to reconfigure a trigger condition of a measurement reporting event of the terminal device; and the terminal device may perform, based on the first information, the method provided in the first aspect. Optionally, the network device may perform the method provided in the second aspect.

In some other examples, the terminal device may perform the method provided in the third aspect or the fourth aspect, and the network device may be a network device that provides a service for the terminal device.

According to an eighth aspect, an embodiment of this application further provides a computer program. When the computer program runs on a computer, the computer is enabled to perform the method provided in any one of the foregoing aspects.

According to a ninth aspect, an embodiment of this application further provides a computer-readable storage medium. The computer-readable storage medium stores a computer program, and when the computer program is executed by a computer, the computer is enabled to perform the method provided in any one of the foregoing aspects.

According to a tenth aspect, an embodiment of this application further provides a chip. The chip is configured to read a computer program stored in a memory, to perform the method provided in any one of the foregoing aspects.

According to an eleventh aspect, an embodiment of this application further provides a chip system. The chip system includes a processor, configured to support a computer apparatus in implementing the method provided in any one of the foregoing aspects. In a possible design, the chip system further includes a memory, and the memory is configured to store a program and data that are necessary for the computer apparatus. The chip system may include a chip, or may include a chip and another discrete component.

For technical effects that can be achieved in any one of the fifth aspect to the eleventh aspect, refer to the technical effects that can be achieved in any possible design in any one of the first aspect to the fourth aspect. No repeated description is provided.

### BRIEF DESCRIPTION OF DRAWINGS

FIG. 1 is a diagram of an architecture of a communication system according to an embodiment of this application;
FIG. 2 is a flowchart of a communication method according to an embodiment of this application;
FIG. 3A is a diagram of a first list according to an embodiment of this application;
FIG. 3B is a diagram of another first list according to an embodiment of this application;
FIG. 4A is a flowchart of another communication method according to an embodiment of this application;
FIG. 4B is a flowchart of another communication method according to an embodiment of this application;
FIG. 5 is a diagram of another first list according to an embodiment of this application;
FIG. 6 is a diagram of a structure of a communication apparatus according to an embodiment of this application; and
FIG. 7 is a diagram of a structure of another communication apparatus according to an embodiment of this application.

### DESCRIPTION OF EMBODIMENTS

This application provides a communication method and apparatus. The method and the apparatus are based on a same technical concept. Because problem-resolving principles of the method and the apparatus are similar, mutual reference may be made to implementations of the apparatus and the method, and repeated parts are not described again.

The following first describes some terms in this application, to facilitate understanding of a person skilled in the art.
(1) A communication apparatus is generally an apparatus having a communication function. For example, the communication apparatus may be but is not limited to a terminal device, a network device, an access point, a core network (core network, CN) device, or the like.
(2) Signal quality may be signal strength. A parameter representing or indicating the signal strength may include but is not limited to at least one of the following: reference signal received power (reference signal received power, RSRP), reference signal received quality (reference signal received quality, RSRQ), a received signal strength indication (received signal strength indication, RSSI), and a signal to interference plus noise ratio (signal to interference plus noise ratio, SINR).
(3) In this application, retaining a cell in a first list means retaining identification and measurement information of the cell in the first list. Deleting a cell in a first list means deleting identification and measurement information of the cell in the first list.
(4) In this application, a speed of a terminal device may also be referred to as a moving speed or a movement speed of the terminal device.
(5) In this application, measurement information may include a measurement quantity result of a reference signal of a cell, and the measurement quantity result may include a cell-level measurement quantity result and/or a beam-level measurement quantity result, to reflect signal quality of the cell. Optionally, the reference signal may include but is not limited to at least one of the following: a synchronization signal and physical broadcast channel (physical broadcast channel, PBCH) block (synchronization signal and PBCH block, SSB), and a channel state information reference signal (channel state information reference signal, CSI-RS). A parameter used to reflect or represent a measurement quantity may include but is not limited to at least one of the following: RSRP, RSRQ, an RSSI, and an SINR.
(6) In this application, deletion and removal may be interchangeable.
(7) In this application, a quantity of triggering cells may also have another name, for example, a triggering cell threshold, provided that there is a same function. This is not limited in this application.

In embodiments of this application, unless otherwise specified, a quantity of nouns represents "a singular noun or a plural noun", that is, "one or more". "At least one" means one or more, and "a plurality of" means two or more. The term "and/or" describes an association relationship of associated objects, and indicates that three relationships may exist. For example, A and/or B may indicate the following three cases: Only A exists, both A and B exist, and only B exists. "At least one of the following items (pieces)" or a similar expression thereof refers to any combination of these items (pieces), including a single item (piece) or any combination of a plurality of items (pieces).

In addition, it should be understood that in the descriptions of this application, words such as "first" and "second" are merely used for distinguishing, and should not be understood as an indication or implication of relative importance or an indication or implication of a sequence.

In addition, in this application, in a case without a conflict, "greater than" and "greater than or equal to" may be interchangeable, and "less than" and "less than or equal to" may be interchangeable.

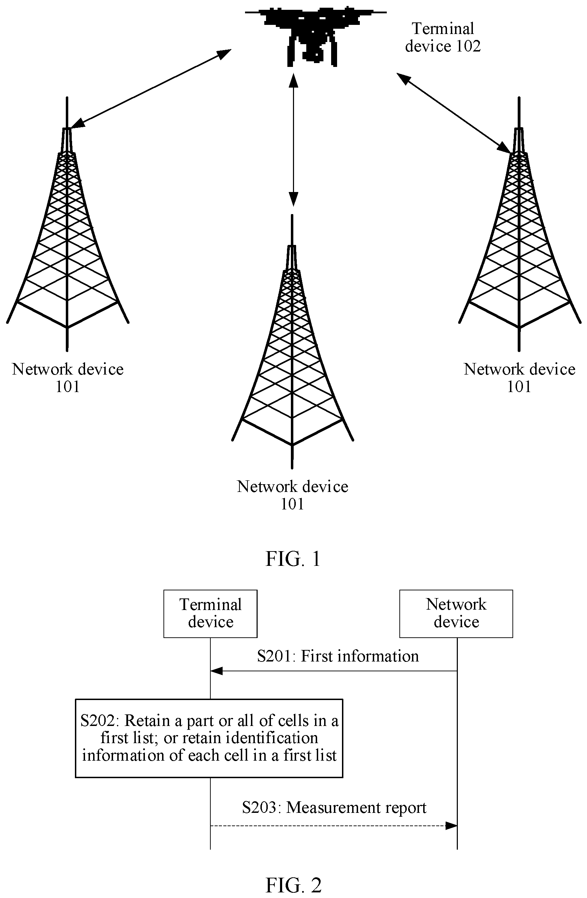

FIG. 1 is a diagram of an architecture of a communication system according to an embodiment of this application. As shown in FIG. 1, the communication system includes a network device 101 and a terminal device 102. An apparatus provided in embodiments of this application may be used in the network device 101 or the terminal device 102. It may be understood that FIG. 1 shows only one possible communication system architecture to which embodiments of this application may be applied. In another possible scenario, the communication system architecture may alternatively include another device.

Optionally, based on the architecture shown in FIG. 1, communication may be performed between the network device 101 and the terminal device 102, between different network devices 101, and between different terminal devices 102. For example, the terminal device 102 may communicate with the network device 101 through a radio air interface. For another example, the terminal device 102 may communicate with the network device 101 through a relay device. For another example, different network devices 101 may communicate with each other in a wired manner. For another example, different terminal devices 102 may communicate with each other through a direct communication interface.

The network device 101 is a node in a radio access network (radio access network, RAN), and may also be referred to as a base station, a RAN node (or device), or an access network (access network, AN) node (or device). The network device 101 may be configured to perform access management on the terminal device 102, and communicate with a core network. Currently, some examples of the network device 101 are: a next generation NodeB (next generation NodeB, gNB) in new radio (new radio, NR), a transmission reception point (transmission reception point, TRP), an evolved NodeB (evolved NodeB, eNB), a home base station (for example, a home evolved NodeB, or a home NodeB, HNB), a baseband unit (baseband unit, BBU), a Wi-Fi access point (access point, AP), a satellite device, a network device in a 5th generation (5^{th} generation, 5G) communication system, a network device in an evolved communication system after 5G, an access node in a wireless fidelity (wireless fidelity, Wi-Fi) system, a wireless relay node, a wireless backhaul node, and the like. The network device 101 may include one or more co-site or non-co-site transmission reception points.

Alternatively, the network device 101 may be another device having a network device function. For example, the network device 101 may alternatively be a device that functions as a base station in device-to-device (device-to-device, D2D) communication, internet of vehicles communication, machine communication, or drone communication, or a network device (which may be deployed on a high-altitude platform, a satellite, or a high-altitude aircraft) in a non-terrestrial network (non-terrestrial network, NTN) communication system.

A specific form of the network device 101 may be a macro base station configured to provide a macro cell (macro cell), a micro base station configured to provide a pico cell (pico cell), or a femto base station configured to provide a femto cell (femto cell).

In embodiments of this application, a communication apparatus configured to implement a function of the network device may be a network device, may be a network device that has some functions of a base station, or may be an apparatus that can support the network device in implementing the function, for example, a chip system. The apparatus may be installed in the network device.

The terminal device 102 may also be referred to as user equipment (user equipment, UE), a mobile station (mobile station, MS), a mobile terminal (mobile terminal, MT), a wireless terminal, a handheld device, a client, a user terminal, a user apparatus, a subscriber unit, a subscriber station, a terminal, an access terminal, an access station, a UE station, a remote station, a mobile device, a wireless communication device, or the like, and is a user-side device having wireless sending and receiving functions. In this application, the terminal device 102 may be a flight device such as a drone.

In this application, a communication apparatus configured to implement a function of the terminal device may be a terminal device, or may be an apparatus that can support the terminal device in implementing the function of the terminal device, for example, a chip system. The apparatus may be installed in the terminal device.

It should be noted that the communication system shown in FIG. 1 does not constitute a limitation on a communication system to which embodiments of this application are applicable. Therefore, a communication method provided in embodiments of this application is further applicable to communication systems of various standards, for example, a long term evolution (long term evolution, LTE) communication system, a 5G communication system, a 6th generation (6^{th} generation, 6G) communication system, a future communication system, vehicle to everything (vehicle to everything, V2X), long term evolution-vehicle (LTE-vehicle, LTE-V), vehicle to vehicle (vehicle to vehicle, V2V), internet of vehicles, machine type communication (Machine Type Communication, MTC), internet of things (internet of things, IoT), long term evolution-machine to machine (LTE-machine to machine, LTE-M), machine to machine (machine to machine, M2M), and the like. In addition, it should be further noted that names of network elements in the communication system are not limited in embodiments of this application. For example, in communication systems of different standards, network elements may have other names. For another example, when a plurality of network elements are integrated into a same physical device, the physical device may alternatively have another name.

For ease of understanding this application, the following describes related technologies.

Load balancing is an important feature of NR. Load balancing in NR can be implemented through handover or redirection during radio resource control (radio resource control, RRC) connection release. Both handover and redirection are performed based on a mobility measurement result. Therefore, mobility measurement is the basis of load balancing.

A mobility measurement process may include the following steps.

Step 1: A network device sends measurement configuration information (measConfig) to a terminal device.

Step 2: The terminal device performs measurement based on the measurement configuration information, and reports a measurement result to the network device.

The measurement configuration information in step 1 may be used to configure a trigger condition of a measurement reporting event of the terminal device. Optionally, the measurement configuration information includes a measurement object (measurement object, MO), a reporting configuration (reporting configuration, reportConfig), a measurement identifier (measurement identifier, measId), a measurement quantity configuration (quantity configuration), and the like. The following describes the information in the measurement configuration information in detail.

MO: In an LTE system, one MO corresponds to one frequency, and a measurement parameter of the measurement object includes a configuration status of a measurement resource at the frequency, for example, a cell list at the frequency. In an NR system, a measurement parameter of an MO may include a measurement parameter corresponding to an SSB, and may further include a measurement parameter corresponding to a CSI-RS.

Reporting configuration: may indicate a trigger condition of a measurement reporting event. For example, a measurement parameter of the reporting configuration includes a type of a reference signal, a reporting type, a reporting format, and the like. The reporting type includes event-triggered reporting, periodic-triggered reporting, or time-based reporting. If the reporting type is event-triggered reporting, the measurement parameter further includes information such as an event type, and the information such as the event type may indicate a trigger condition of measurement reporting time.

Currently, the event type may include at least one of the following: an event A1, an event A2, an event A3, an event A4, an event A5, an event H1, and an event H2. The event A1 is that signal quality of a serving cell is greater than a threshold 1, and may be used to stop or disable measurement of some cells. For example, when the signal quality of the serving cell is greater than the threshold 1, the terminal device may stop measuring a neighboring cell. The event A2 is that signal quality of a serving cell is less than a threshold 2, and may be used to start measurement of some cells. After the event A2 occurs, an operation such as handover may occur. For example, when the signal quality of the serving cell is less than the threshold 2, the terminal device may start measurement on a neighboring cell. The event A3 is that signal quality of a neighboring cell is better than signal quality of a serving cell, and may be used to determine whether to hand over the terminal device to the neighboring cell. The event A4 is that signal quality of a neighboring cell is greater than a threshold 3. The event A5 is that signal quality of a serving cell is less than a threshold 4, and signal quality of a neighboring cell is greater than a threshold 5. The event H1 and the event H2 are events related to a drone. The event H1 is that a height of the terminal device is greater than a threshold 6. The event H2 is that a height of the terminal device is less than a threshold 7.

Measurement identifier: is used to associate a measurement object and a reporting configuration.

Measurement quantity configuration: Before reporting a measurement report, the terminal device first performs layer 3 filtering on signal quality. The measurement quantity configuration means a configuration of a layer 3 filtering coefficient.

In this case, in step 2, if the terminal device detects, through measurement, that a layer 3 filtering result of a cell within TTT always satisfies a corresponding trigger condition, the terminal device adds the cell to a list of triggered cells (cellsTriggeredList), and sends a measurement report of a cell in the list of triggered cells to the network device.

Optionally, in step 1, the measurement configuration information further includes a quantity N of triggering cells. In this case, the configured trigger condition further includes the quantity of triggering cells. In this case, step 2 may include: After the terminal device detects, through measurement, that layer 3 filtering results of one or more cells within the TTT always satisfy a corresponding trigger condition, the terminal device may perform a corresponding operation based on whether a quantity of cells in the list of triggered cells is greater than or equal to the quantity of triggering cells currently. This is described below.

If the quantity of cells in the list of triggered cells is greater than or equal to the quantity of triggering cells currently, the terminal device may add the one or more cells to the list of triggered cells. Optionally, in this case, the terminal device does not send a measurement report. For example, the list of triggered cells includes a cell a1 to a cell a3, and the quantity of triggering cells is 3. The terminal device detects, through measurement, that a layer 3 filtering result of a cell a4 within the TTT always satisfies a corresponding trigger condition. Because the quantity of cells in the list of triggered cells is greater than or equal to the quantity of triggering cells currently, the terminal device may add the cell a4 to the list of triggered cells, and does not send a measurement report.

If the quantity of cells in the list of triggered cells is less than the quantity of triggering cells currently, the terminal device may add the one or more cells to the list of triggered cells. After the one or more cells are added to the list of triggered cells, if the quantity of cells in the list of triggered cells is greater than or equal to the quantity of triggering cells, the terminal device may send a measurement report to the network device. For example, the list of triggered cells includes a cell a1 to a cell a3, and the quantity of triggering cells is 4. The terminal device detects, through measurement, that a layer 3 filtering result of a cell a4 within the TTT always satisfies a corresponding trigger condition. Because the quantity of cells in the list of triggered cells is less than the quantity of triggering cells currently, the terminal device may add the cell a4 to the list of triggered cells. After the cell a4 is added to the list of triggered cells, the quantity of cells in the list of triggered cells is greater than or equal to the quantity of triggering cells, and therefore the terminal device may send a measurement report.

A related method in which the measurement configuration information includes the quantity N of triggering cells is applicable to the event A3, the event A4, and the event A5.

Because all network devices transmit electromagnetic waves toward the ground, a signal in the air is usually a signal reflected by the ground and a signal carried in a beam side lobe of the network device. Therefore, a signal received by a flight device such as a drone from the network device is relatively weak. In addition, the flight device such as the drone mainly uses a line of sight (LOS, line of sight) path in the air. Therefore, the flight device such as the drone can receive signals of more network devices, thereby triggering more frequent and more measurement reports. A quantity of measurement reports sent by the flight device such as the drone can be reduced by setting the quantity of triggering cells.

In the foregoing mobility measurement process, the trigger condition of the measurement reporting event of the terminal device may change. For example, the quantity of triggering cells of the terminal device may change. How the terminal device determines an appropriate quantity of triggering cells needs to be further studied. In addition, after the terminal device determines a new quantity of triggering cells, how to process a cell in the list of triggered cells also needs to be further studied.

In a possible case, after sending measurement configuration information to the terminal device for the first time, the network device may further send new measurement configuration information to the terminal device, so as to reconfigure the trigger condition of the measurement reporting event of the terminal device, for example, reconfigure the quantity of triggering cells. Each time the terminal device reconfigures the trigger condition of the measurement reporting event based on the new measurement configuration information, the terminal device clears a current measurement report entry. For example, the terminal device clears a current list of triggered cells. When the terminal device is a flight device such as a drone, status information such as a height and a speed of the terminal device does not jump. Therefore, in a subsequent measurement process, the terminal device may add a cell removed from the list of triggered cells to the list again. In this case, time for reporting the measurement report of the terminal device is increased, and consequently, the terminal device may be handed over too late, or even a radio link failure may occur.

In another possible case, the quantity of triggering cells in the trigger condition is modified by the terminal device based on a condition. Optionally, the measurement configuration information sent by the network device to the terminal device may include a correspondence between at least one value and at least one condition. When a condition satisfied by the terminal device changes from one condition in the at least one condition to another condition, the quantity of triggering cells of the terminal device changes from a value corresponding to the one condition to a value corresponding to the another condition. For example, the at least one condition may include a condition b1 and a condition b2, the condition b1 is that the height of the terminal device is within a height range 1, and the condition b2 is that the height of the terminal device is within a height range 2. The condition b1 corresponds to 3, and the condition b2 corresponds to 4. When a range within which the height of the terminal device falls changes from the height range 1 to the height range 2, the terminal device may determine that the quantity of triggering cells changes from 3 to 4. In this case, the terminal device uses, based on a condition, a parameter configured by the network device, but does not reconfigure the trigger condition. Therefore, the terminal device does not clear the list of triggered cells. This is not aligned with an action of the terminal device performed when the network device reconfigures the quantity of triggering cells, and the terminal device may send an invalid measurement result to the network device.

To resolve at least one of the foregoing problems, an embodiment of this application provides a communication method. The method may be applied to the communication system shown in FIG. 1. The following specifically describes a procedure of the method with reference to a flowchart shown in FIG. 2.

S201: A network device sends first information to a terminal device. Correspondingly, the terminal device receives the first information from the network device.

The first information may be used to reconfigure a trigger condition of a measurement reporting event of the terminal device. For example (which is referred to as example 1 below), before the network device sends the first information, the trigger condition of the measurement reporting event of the terminal device includes a trigger condition a1. If the first information includes a trigger condition a2, the first information is used to configure the trigger condition of the measurement reporting event of the terminal device as the trigger condition a2.

For example, the first information may be the measurement configuration information in step 1 above, and details are not described herein again.

Optionally, the trigger condition of the measurement reporting event of the terminal device may include a quantity of triggering cells. Quantities of triggering cells in trigger conditions before and after reconfiguration based on the first information may be the same or different. For example, in example 1, the trigger condition a1 includes a quantity 1 of triggering cells, and the trigger condition a2 includes a quantity 2 of triggering cells. For another example, in example 1, the trigger condition a1 includes a quantity 1 of triggering cells, and the trigger condition a2 includes the quantity 1 of triggering cells. In addition, parameters other than the quantities of triggering cells in the trigger conditions before and after reconfiguration based on the first information may be the same or different. The parameter other than the quantity of triggering cells in the trigger condition may include a quantity of reports, a list of cells allowed to be used, and the like. The quantity of reports indicates a maximum quantity of times the terminal device reports a measurement report.

Optionally, the network device may perform S201 in one of the following cases.

Case 1: The terminal device sends second information to the network device. Correspondingly, the network device receives the second information from the terminal device. The network device may determine, based on the second information, to send the first information to the terminal device.

The second information may include but is not limited to at least one of the following.
1. Information indicating a height of the terminal device (briefly referred to as information a1 below): For example, a value of the information a1 may be a value of the height of the terminal device, and a unit of the height of the terminal device may be a specified unit, for example, meter (m) or kilometer. For example, if the value of the information a1 is 100, and the unit of the height of the terminal device is meter, the height of the terminal device is 100 meters.
2. Information indicating a speed of the terminal device (briefly referred to as information a2 below): For example, a value of the information a2 may be a value of the speed of the terminal device, and a unit of the speed of the terminal device may be a specified unit, for example, meter per second (m/s) or kilometer per hour (km/h). For example, if the value of the information a2 is 30, and the unit of the speed of the terminal device is km/h, the speed of the terminal device is 30 km/h.
3. Information indicating a location of the terminal device (briefly referred to as information a3 below): The information a3 may be latitude and longitude information of the location of the terminal device, or may be global positioning system (global positioning system, GPS) information of the terminal device, or may be other information that can indicate the location of the terminal device, for example, an identifier of a cell in which the terminal device is located.
4. Information indicating that an antenna currently used by the terminal device changes (briefly referred to as information a4 below): For example, the terminal device includes an omnidirectional antenna and a directional antenna. When the antenna used by the terminal device changes from the omnidirectional antenna to the directional antenna, or the antenna used by the terminal device changes from the directional antenna to the omnidirectional antenna, the antenna currently used by the terminal device changes. For example, the information a4 may be indicated by using a field 1. When a value of the field 1 is a first value (for example, 0 or 1), the antenna currently used by the terminal device changes.
5. Information indicating that the height of the terminal device is within a first height range (briefly referred to as information a5 below): In this application, there may be at least one height range, and the at least one height range may be limited by using one or more height thresholds. For example, the height thresholds may include a height threshold 1 (h1 for short, for example, 100 m) and a height threshold 2 (h2 for short, for example, 500 m), where h1<h2. The at least one height range may include: a height range 1: the height is less than h1; a height range 2: the height is greater than or equal to h1 and less than h2; and a height range 3: the height is greater than or equal to h2.

For example, a correspondence between the information a5 and the height range may be shown in Table 1. In this way, a height range within which the height of the terminal device falls may be indicated by using 2 bits in the information a5. When the height of the terminal device is within the height range 1, the information a5 is 00, and in this case, the first height range is the height range 1. When the height of the terminal device is within the height range 2, the information a5 is 01, and in this case, the first height range is the height range 2. When the height of the terminal device is within the height range 3, the information a5 is 10, and in this case, the first height range is the height range 3.

**Table 1**

| Information a5 | Height range |
|---|---|
| 00 | Height range 1 |
| 01 | Height range 2 |
| 10 | Height range 3 |

Optionally, the information a5 may include an event H1 or an event H2.

Because the height range may be limited by the height threshold, the information indicating that the height of the terminal device is within the first height range may also be referred to as information indicating a relationship between the height of the terminal device and at least one height threshold. The relationship between the height of the terminal device and the at least one height threshold may include at least one of the following: The height of the terminal device is greater than or equal to a first height threshold, and the height of the terminal device is less than a second height threshold. For example, the first height threshold and the second height threshold each may be any threshold between the height threshold 1 and the height threshold 2.

6. Information indicating that the speed of the terminal device is within a first speed range (briefly referred to as information a6 below): In this application, there may be at least one speed range, and the at least one speed range may be limited by using one or more speed thresholds. For example, the speed thresholds may include a speed threshold 1 (v1 for short, for example, 40 km/h) and a speed threshold 2 (v2 for short, for example, 80 km/h), where v1<v2. The at least one speed range may include: a speed range 1: the speed is less than v1; a speed range 2: the speed is greater than or equal to v1 and less than v2; and a speed range 3: the speed is greater than or equal to v2.

For example, a correspondence between the information a6 and the speed range may be shown in Table 2. In this way, a speed range within which the speed of the terminal device falls may be indicated by using 2 bits in the information a6. When the speed of the terminal device is within the speed range 1, the information a6 is 00, and in this case, the first speed range is the speed range 1. When the speed of the terminal device is within the speed range 2, the information a6 is 01, and in this case, the first speed range is the speed range 2. When the speed of the terminal device is within the speed range 3, the information a6 is 10, and in this case, the first speed range is the speed range 3.

**Table 2**

| Information a6 | Speed range |
|---|---|
| 00 | Speed range 1 |
| 01 | Speed range 2 |
| 10 | Speed range 3 |

Because the speed range may be limited by the speed threshold, the information indicating that the speed of the terminal device is within the first speed range may also be referred to as information indicating a relationship between the speed of the terminal device and at least one speed threshold. The relationship between the speed of the terminal device and the at least one speed threshold may include at least one of the following: The speed of the terminal device is greater than or equal to a first speed threshold, and the speed of the terminal device is less than a second speed threshold. For example, the first speed threshold and the second speed threshold each may be any threshold between the speed threshold 1 and the speed threshold 2.

7. Information indicating that the location of the terminal device is within a first location range (briefly referred to as information a7 below): In a design, the first location range may be a geographical location range. For example, the first location range may be a no-fly zone. In another design, the first location range is a service range of a communication apparatus (for example, the network device) that provides a service for the terminal device. The information a7 may include at least one of the following: a network device identifier (identifier, ID), a cell identifier (cell identifier, cell ID), and a tracking area identity (tracking area identity, TAI).

Optionally, the terminal device may send the second information to the network device in one of the following implementations.

Implementation 1: When the terminal device satisfies a second condition, the terminal device may send the second information to the network device.

The second condition may include but is not limited to at least one of the following:
1. The height of the terminal device is within the first height range. For specific content of the first height range, refer to the description of the height range in the information a5. Details are not described herein again. Optionally, when the height of the terminal device is within the first height range, the network device needs to reconfigure the trigger condition of the measurement reporting event of the terminal device. For example, when a range within which the height of the terminal device falls changes from a second height range to the first height range, and a trigger condition corresponding to the second height range is different from a trigger condition corresponding to the first height range, the network device needs to reconfigure the trigger condition of the measurement reporting event of the terminal device.
2. The speed of the terminal device is within the first speed range. For specific content of the first speed range, refer to the description of the speed range in the information a6. Details are not described herein again. Optionally, when the speed of the terminal device is within the first speed range, the network device needs to reconfigure the trigger condition of the measurement reporting event of the terminal device. For example, when a range within which the speed of the terminal device falls changes from a second speed range to the first speed range, and a trigger condition corresponding to the second speed range is different from a trigger condition corresponding to the first speed range, the network device needs to reconfigure the trigger condition of the measurement reporting event of the terminal device.
3. The location of the terminal device is within the first location range. For specific content of the first location range, refer to the description of the first location range in the information a7. Details are not described herein again. Optionally, when the location of the terminal device is within the first location range, the network device needs to reconfigure the trigger condition of the measurement reporting event of the terminal device. For example, when a range within which the location of the terminal device falls changes from a second location range to the first location range, and a trigger condition corresponding to the second location range is different from a trigger condition corresponding to the first location range, the network device needs to reconfigure the trigger condition of the measurement reporting event of the terminal device.
4. The antenna currently used by the terminal device changes: For specific content, refer to the description that the antenna currently used by the terminal device changes in the information a4, and details are not described herein again.

The terminal device may obtain, in one of the following manners, information for determining the second condition.

Manner 1: The network device sends, to the terminal device, the information for determining the second condition. Correspondingly, the terminal device receives, from the network device, the information for determining the second condition.

In a possible design, the information for determining the second condition may directly indicate the second condition. For example, when the second condition includes that the height of the terminal device is within the first height range, the information for determining the second condition may include information indicating the first height range. For another example, when the second condition includes that the speed of the terminal device is within the first speed range, the information for determining the second condition may include information indicating the first speed range.

In another possible design, the information indicating the second condition may be information that has a correspondence with the second condition. For example, the correspondence between the information indicating the second condition and the second condition is shown in Table 3. The terminal device and the network device may store the correspondence. When the information indicating the second condition is 00, the second condition includes that the height of the terminal device is within the first height range. When the information indicating the second condition is 01, the second condition includes that the speed of the terminal device is within the first speed range. When the information indicating the second condition is 10, the second condition includes that the height of the terminal device is within the first height range, and the speed of the terminal device is within the first speed range.

**Table 3**

| Information indicating the second condition | Second condition |
|---|---|
| 00 | The height of the terminal device is within the first height range |
| 01 | The speed of the terminal device is within the first speed range |
| 10 | The height of the terminal device is within the first height range; and the speed of the terminal device is within the first speed range |

The information for determining the second condition may be carried in an existing message (for example, a message sent by the network device to the terminal device in a process in which the terminal device accesses the network device), or may be carried in a new message. This is not limited in this application.

In manner 1, the terminal device can conveniently obtain, from the network device, the information for determining the second condition.

Manner 2: The terminal device obtains stored information for determining the second condition.

For specific content of the information for determining the second condition, refer to manner 1. Details are not described herein again.

The information that is stored in the terminal device and that is used to determine the second condition may be preset.

In the implementation 1, the terminal device sends the second information to the network device only when the second condition is satisfied, so that transmission overheads can be reduced, and a quantity of second information received by the network device can be reduced, thereby reducing calculation overheads required by the network device to determine the first information based on the second information, and reducing energy consumption of the network device.

Implementation 2: The terminal device periodically sends the second information to the network device.

A period for sending the second information by the terminal device may be obtained from another device, or may be preconfigured. The another device is, for example, the network device.

Implementation 3: The terminal device sends the second information to the network device based on a request of the network device.

The network device may periodically request the terminal device to send the second information, or may request, based on event triggering, the terminal device to send the second information. This is not limited in this application.

Case 2: The network device determines that delayed reporting occurs on the terminal device. For example, the network device determines, based on a measurement result reported by the terminal device, to hand over the terminal device to a neighboring cell, but a radio link failure (radio link failure, RLF) occurs on the terminal device due to too late handover. When determining that the RLF is caused due to too late handover of the terminal device, the network device may determine that delayed reporting occurs on the terminal device. When the network device determines that delayed reporting occurs on the terminal device, the network device may adjust the trigger condition, for example, reduce the quantity of triggering cells in the trigger condition.

S202: After the trigger condition is reconfigured based on the first information, the terminal device retains a part or all of cells in a first list, or retains identification information of each cell in a first list. The first list includes a cell that satisfies the trigger condition. For example, the first list is a list of triggered cells.

A process in which the terminal device reconfigures the trigger condition based on the first information is not limited in this application.

Optionally, the terminal device may perform S202 in one of the following cases.

Case 1: The network device indicates, by using a second indication, the terminal device to perform S202. Specifically, the network device sends the second indication to the terminal device. Correspondingly, the terminal device may receive the second indication from the network device. The second indication indicates the terminal device to retain the part or all of the cells in the first list or retain the identification information of each cell in the first list after the terminal device receives the first information.

The second indication may be carried in an existing message (for example, an RRC reconfiguration message), or may be carried in a new message. This is not limited in this application.

Case 2: After receiving the first information, the terminal device performs S202 by default.

The following describes "retaining the part or all of the cells in the first list". Retaining the part or all of the cells in the first list may also be referred to as retaining at least one cell in the first list. When retaining the at least one cell in the first list, the terminal device may retain an identifier of the at least one cell in the first list. For example, before the terminal device reconfigures the trigger condition based on the first information, the first list includes identifiers of a cell 1 to a cell 3. After the terminal device reconfigures the trigger condition based on the first information, the first list includes the identifiers of the cell 1 to the cell 3.

Optionally, the terminal device may retain the at least one cell in the first list in one of the following implementations.

Implementation 1: The terminal device may retain the part or all of the cells in the first list based on signal quality of each cell in the first list and/or duration for which each cell in the first list is included in the first list. In other words, the terminal device may retain a cell in the first list based on the signal quality of each cell in the first list and/or the duration for which each cell in the first list is included in the first list. The retained cell may be the part of the cells in the first list, or may be all of the cells in the first list.

Optionally, the terminal device may retain, based on the signal quality of each cell in the first list and/or the duration for which each cell in the first list is included in the first list, a cell that satisfies a first condition in the first list. When a part of the cells in the first list satisfies the first condition, the terminal device retains the part of the cells in the first list. When all of the cells in the first list satisfy the first condition, the terminal device retains all of the cells in the first list.

The first condition may include but is not limited to at least one of the following:
Condition 1: Signal quality of a cell is greater than a first signal quality threshold. For example, the first list includes a cell 1 to a cell 4. If signal quality of the cell 1 to the cell 3 is greater than the first signal quality threshold, the cell 1 to the cell 3 satisfy the condition 1 in the first condition.
Condition 2: Duration for which a cell is included in the first list is less than or equal to a first duration threshold. For example, the first list includes a cell 1 to a cell 4. If duration for which the cell 1 and the cell 3 are included in the first list is less than or equal to the first duration threshold, the cell 1 and the cell 3 satisfy the condition 2 in the first condition.
Condition 3: Duration for which a cell is included in the first list is greater than a second duration threshold. For example, the first list includes a cell 1 to a cell 4. If duration for which the cell 2 and the cell 4 are included in the first list is greater than the second duration threshold, the cell 2 and the cell 4 satisfy the condition 3 in the first condition.
Condition 4: A cell belongs to N cells with best signal quality in the first list, where N is a positive integer. For example, N is 3, and the first list includes a cell 1 to a cell 4. If the cell 1 to the cell 3 belong to three cells with best signal quality in the first list, the cell 1 to the cell 3 satisfy the condition 4 in the first condition.
Condition 5: A cell belongs to O cells in the first list that are included in the first list for shortest duration, where O is a positive integer. For example, O is 3, and the first list includes a cell 1 to a cell 4. If the cell 1 to the cell 3 belong to three cells in the first list that are included in the first list for shortest duration, the cell 1 to the cell 3 satisfy the condition 5 in the first condition.

The terminal device may obtain, in one of the following manners, information for determining the first condition.

Manner 1: The network device sends, to the terminal device, the information for determining the first condition. Correspondingly, the terminal device receives, from the network device, the information for determining the first condition.

The network device may send, to the terminal device during initial access of the terminal device, the information for determining the first condition; or may send, to the terminal device after determining the first condition based on a status of the terminal device (for example, the height of the terminal device), the information for determining the first condition. The following describes how the network device determines the first condition based on the status of the terminal device (for example, the height of the terminal device). For example, if the network device determines, based on the second information sent by the terminal device, that a height range of the terminal device is 0 meters to 200 meters, the first signal quality threshold in the first condition determined by the network device is a threshold corresponding to the height range.

In a possible design, the information for determining the first condition may directly indicate the first condition. For example, when the first condition includes that signal quality of a cell is greater than the first signal quality threshold, the information for determining the first condition may include the first signal quality threshold. For another example, when the first condition includes that duration for which a cell is included in the first list is less than or equal to the first duration threshold, the information for determining the first condition may include the first duration threshold.

In another possible design, the information indicating the first condition may be information that has a correspondence with the first condition. For example, the correspondence between the information indicating the first condition and the first condition is shown in Table 4. The terminal device and the network device may store the correspondence. When the information indicating the first condition is 00, the first condition includes that signal quality of a cell is greater than the first signal quality threshold. When the information indicating the first condition is 01, the first condition includes that duration for which a cell is included in the first list is less than or equal to the first duration threshold. When the information indicating the first condition is 10, the first condition includes that signal quality of a cell is greater than the first signal quality threshold, and duration for which the cell is included in the first list is less than or equal to the first duration threshold.

**Table 4**

| Information indicating the first condition | First condition |
|---|---|
| 00 | Signal quality of a cell is greater than the first signal quality threshold |
| 01 | Duration for which a cell is included in the first list is less than or equal to the first duration threshold |
| 10 | Signal quality of a cell is greater than the first signal quality threshold; and duration for which the cell is included in the first list is less than or equal to the first duration threshold |

The information for determining the first condition and the first information may be carried in different messages, or may be carried in a same message. This is not limited in this application. In addition, a sequence of obtaining the information for determining the first condition and the first information is not limited in this application.

Manner 2: The terminal device obtains stored information for determining the first condition.

For specific content of the information for determining the first condition, refer to manner 1. Details are not described herein again.

The information that is stored in the terminal device and that is used to determine the first condition may be preset, or may be determined by the terminal device. When the terminal device determines the information for determining the first condition, the terminal device may determine the first condition based on the status of the terminal device (for example, the height of the terminal device). For a determining manner, refer to the manner in which the network device determines the first condition in manner 1. Details are not described herein again.

In the implementation 1, the terminal device may retain the part or all of the cells in the first list based on the signal quality of each cell in the first list and/or the duration for which each cell in the first list is included in the first list, so that validity of information in the first list can be improved.

Implementation 2: After the trigger condition is reconfigured based on the first information, the terminal device may retain all of the cells in the first list by default. In this case, the terminal device does not need to retain all of the cells in the first list based on signal quality of each cell in the first list and/or duration for which each cell in the first list is included in the first list, thereby reducing energy consumption of the terminal device.

Optionally, in the implementation 2, the terminal device may also retain another configuration related to a measurement report, for example, a list of cells allowed to be used.

In addition, when retaining at least one cell in the first list, the terminal device may further retain measurement information of the at least one cell. For example, before the terminal device reconfigures the trigger condition based on the first information, the first list includes identifiers of a cell 1 to a cell 3, and the terminal device stores measurement information of the cell 1 to the cell 3. In the implementation 1, if the terminal device retains the identifiers of the cell 1 and the cell 2 after the terminal device reconfigures the trigger condition based on the first information, the terminal device may further retain the measurement information of the cell 1 and the cell 2. In the implementation 2, if the terminal device retains the identifiers of the cell 1 to the cell 3 after reconfiguring the trigger condition based on the first information, the terminal device may further retain the measurement information of the cell 1 to the cell 3.

The following describes "retaining the identification information of each cell in the first list".

For example, the terminal device may clear the first list, and retain, in the terminal device, an identifier of each cell in the first list or information that can identify each cell in the first list. For example (which is referred to as example 2 below), before the terminal device reconfigures the trigger condition based on the first information, the first list includes identifiers of a cell 1 to a cell 3. After the terminal device reconfigures the trigger condition based on the first information, the terminal device may clear the first list, and retain the identifiers of the cell 1 to the cell 3 in the terminal device.

Optionally, when the terminal device retains the identifier of each cell in the first list, the terminal device may further delete measurement information of each cell in the first list. For example, based on example 2, the terminal device may further delete measurement information of the cell 1 to the cell 3.

Optionally, after retaining the identification information of each cell in the first list, the terminal device may preferentially measure a cell in the first list based on the retained identification information of each cell in the first list. For example, based on example 2, if the terminal device can measure the cell 1 to a cell 8, after retaining the identifiers of the cell 1 to the cell 3, the terminal device may first measure the cell 1 to the cell 3, and then measure the cell 4 to the cell 8.

Optionally, the method shown in FIG. 2 further includes the following step.

S203: The terminal device sends a measurement report to the network device based on the trigger condition.

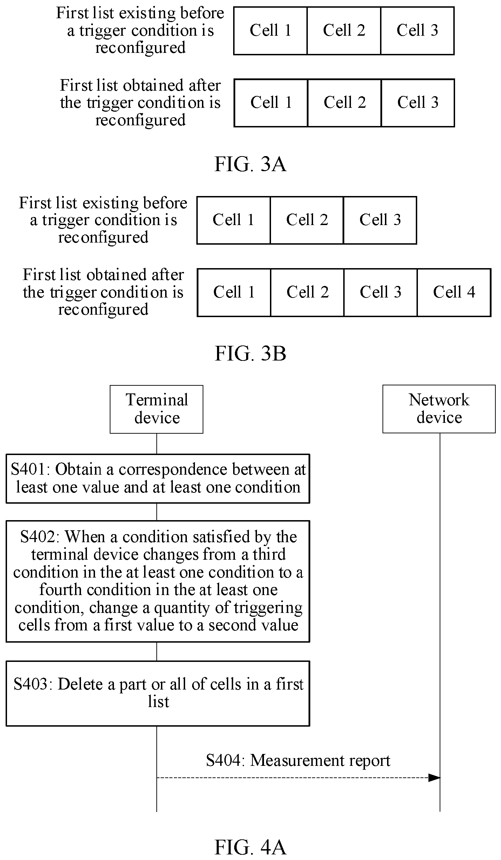

After the terminal device reconfigures the trigger condition based on the first information, if a quantity of cells in the first list is greater than or equal to the quantity of triggering cells in the trigger condition, the terminal device may send the measurement report to the network device. For example, as shown in FIG. 3A, before the terminal device reconfigures the trigger condition based on the first information, the quantity of triggering cells is 4, and the first list includes identifiers of a cell 1 to a cell 3. After the terminal device reconfigures the trigger condition based on the first information, the quantity of triggering cells is 3, and the identifiers of the cell 1 to the cell 3 are retained in the first list. In this way, the quantity of cells in the first list is equal to the quantity of triggering cells, so that the measurement report may be sent to the network device. For another example, as shown in FIG. 3B, before the terminal device reconfigures the trigger condition based on the first information, the quantity of triggering cells is 5, and the first list includes identifiers of a cell 1 to a cell 3. After the terminal device reconfigures the trigger condition based on the first information, the quantity of triggering cells is 4, and the identifiers of the cell 1 to the cell 3 are retained in the first list. In addition, in subsequent measurement, the terminal device adds an identifier of a cell 4 to the first list. In this case, the quantity of cells in the first list is equal to the quantity of triggering cells, so that the measurement report may be sent to the network device.

Optionally, the measurement report includes a first indication. The first indication may indicate M cells in the first list, and M is a positive integer. The M cells are cells recorded by the terminal device in the first list based on a first measurement result, and the first measurement result is a measurement result obtained before the terminal device reconfigures the trigger condition based on the first information. For example, in the foregoing examples shown in FIG. 3A and FIG. 3B, the M cells include the cell 1 to the cell 3, and the first indication may include the identifiers of the cell 1 to the cell 3. According to this method, the terminal device may indicate which cells are recorded in the first list based on a measurement result obtained before the trigger condition is reconfigured, so that validity of the measurement report is improved, and the network device can accordingly perform mobility management more effectively.

According to the method shown in FIG. 2, in a solution, when the network device reconfigures the trigger condition of measurement report reporting for the terminal device, the terminal device retains the part or all of the cells in the first list, so that the first list can be effectively managed. In this way, the terminal device does not need to re-measure these cells, so that resources for measuring these cells can be saved, reporting time of a measurement report can be reduced, and a case of too late handover or even radio link interruption can be avoided.

In another solution, when the network device reconfigures the trigger condition of measurement report reporting for the terminal device, the terminal device may retain the identifier of each cell in the first list, so that information related to the first list can be effectively managed. In this way, the terminal device can quickly measure these cells in a subsequent measurement process, thereby reducing reporting time of a measurement report, and avoiding a case of too late handover or even radio link interruption.

To resolve at least one of the foregoing problems, an embodiment of this application provides another communication method. The method may be applied to the communication system shown in FIG. 1. The following specifically describes a procedure of the method with reference to a flowchart shown in FIG. 4A.

S401: A terminal device obtains a correspondence between at least one value and at least one condition.

The at least one value may be a candidate value of a quantity of triggering cells. When the terminal device satisfies any condition in the at least one condition, the quantity of triggering cells is a value corresponding to the any condition in the at least one value. For example, the at least one condition may include a condition b1 and a condition b2, the condition b1 is that a height of the terminal device is within a height range 1, and the condition b2 is that the height of the terminal device is within a height range 2. The at least one value includes 3 and 4. The condition b1 corresponds to 3, and the condition b2 corresponds to 4. When the height of the terminal device is within the height range 1, the terminal device may determine that the quantity of triggering cells is 3. When the height of the terminal device is within the height range 2, the terminal device may determine that the quantity of triggering cells is 4.

Optionally, the at least one value may alternatively be indicated by using at least one scale factor. In this case, the correspondence between the at least one value and the at least one condition may be indicated by using a correspondence between the at least one scale factor and the at least one condition. For example, the at least one condition may include a condition b1 and a condition b2, the condition b1 is that a height of the terminal device is within a height range 1, and the condition b2 is that the height of the terminal device is within a height range 2. The at least one scale factor includes 0.6 and 0.8. The condition b1 corresponds to 0.6, and the condition b2 corresponds to 0.8. If a largest value in the at least one value is 5, when the height of the terminal device is within the height range 1, the terminal device may determine that the quantity of triggering cells is 3; or when the height of the terminal device is within the height range 2, the terminal device may determine that the quantity of triggering cells is 4.

Optionally, the terminal device may obtain the correspondence between the at least one value and the at least one condition in one of the following implementations.

Implementation A1: The network device sends, to the terminal device, information indicating the correspondence. Correspondingly, the terminal device receives, from the network device, the information indicating the correspondence.

During initial access of the terminal device, the network device may send, to the terminal device, the information indicating the correspondence.

In this application, the information indicating the correspondence may directly indicate the correspondence. For example, the information indicating the correspondence includes the correspondence. Alternatively, the information indicating the correspondence may indirectly indicate the correspondence. For example, the information indicating the correspondence is information corresponding to the correspondence.

Implementation A2: The terminal device obtains preconfigured information indicating the correspondence. The information indicating the correspondence may be information that is preconfigured and stored in the terminal device.

A sixth condition is any condition in the at least one condition, and the sixth condition includes at least one of the following:
1. The height of the terminal device is within a second height range. For the second height range, refer to the description of the first height range in the embodiment shown in FIG. 2. Details are not described herein again.
2. A speed of the terminal device is within a second speed range. For the second speed range, refer to the description of the first speed range in the embodiment shown in FIG. 2. Details are not described herein again.
3. A location of the terminal device is within a second location range. For the second location range, refer to the description of the first location range in the embodiment shown in FIG. 2. Details are not described herein again.
4. An antenna currently used by the terminal device belongs to a first antenna set. For example, the first antenna set includes an omnidirectional antenna or a directional antenna.

It should be understood that specific content of different conditions in the at least one condition may be different. For example, the at least one condition includes a condition a1 and a condition a2. The condition a1 includes that the height of the terminal device is within a height range 1, and the condition a2 includes that the height of the terminal device is within a height range 3. For specific content of the height range 1 and the height range 3, refer to S201. Details are not described herein again.

S402: When a condition satisfied by the terminal device changes from a third condition in the at least one condition to a fourth condition in the at least one condition, the terminal device changes the quantity of triggering cells from a first value to a second value.

The first value is a value corresponding to the third condition in the at least one value, and the second value is a value corresponding to the fourth condition in the at least one value. For example, the at least one condition may include a condition b3 and a condition b2, the condition b3 is that a height of the terminal device is within a height range 3, and the condition b2 is that the height of the terminal device is within a height range 2. The at least one value includes 5 and 4. The condition b3 corresponds to 5, and the condition b2 corresponds to 4. When a range within which the height of the terminal device falls changes from the height range 3 to the height range 2, the terminal device may determine that the quantity of triggering cells changes from 5 to 4.

S403: The terminal device deletes a part or all of cells in a first list, that is, the terminal device deletes one or more cells in the first list. The first list includes a cell that satisfies a trigger condition of a measurement reporting event of the terminal device. For example, the first list is a list of triggered cells.

For example, before the terminal device changes the quantity of triggering cells from the first value to the second value, the first list includes identifiers of a cell 1 to a cell 3. After the terminal device changes the quantity of triggering cells from the first value to the second value, the terminal device may delete the identifiers of the cell 1 to the cell 3 in the first list, or may delete identifiers of a part of the cells in the first list.

Optionally, the terminal device may delete the one or more cells in the first list in one of the following implementations.

Implementation B1: The terminal device deletes the part or all of the cells in the first list based on signal quality of each cell in the first list and/or duration for which each cell in the first list is included in the first list. In other words, the terminal device may delete a cell in the first list based on the signal quality of each cell in the first list and/or the duration for which each cell in the first list is included in the first list. The deleted cell may be the part of the cells in the first list, or may be all of the cells in the first list.

Optionally, the terminal device may delete, based on the signal quality of each cell in the first list and/or the duration for which each cell in the first list is included in the first list, a cell that satisfies a fifth condition in the first list. When a part of the cells in the first list satisfies the fifth condition, the terminal device deletes the part of the cells in the first list. When all of the cells in the first list satisfy the fifth condition, the terminal device deletes all of the cells in the first list.

The fifth condition may include but is not limited to at least one of the following:
Condition 1: Signal quality of a cell is less than or equal to a second signal quality threshold. For example, the first list includes a cell 1 to a cell 4. If signal quality of the cell 4 is less than or equal to the second signal quality threshold, the cell 4 satisfies the condition 1 in the fifth condition.
Condition 2: Duration for which a cell is included in the first list is greater than or equal to a third duration threshold. For example, the first list includes a cell 1 to a cell 4. If duration for which the cell 4 is included in the first list is greater than or equal to the third duration threshold, the cell 4 satisfies the condition 2 in the fifth condition.
Condition 3: Duration for which a cell is included in the first list is less than a fourth duration threshold. For example, the first list includes a cell 1 to a cell 4. If duration for which the cell 1 to the cell 3 are included in the first list is less than the fourth duration threshold, the cell 1 to the cell 3 satisfy the condition 3 in the fifth condition.
Condition 4: A cell belongs to P cells with poorest signal quality in the first list, where P is a positive integer. For example, P is 1, and the first list includes a cell 1 to a cell 4. If the cell 4 belongs to one cell with poorest signal quality in the first list, the cell 4 satisfies the condition 4 in the fifth condition.
Condition 5: A cell belongs to Q cells in the first list that are included in the first list for longest duration, where Q is a positive integer. For example, Q is 1, and the first list includes a cell 1 to a cell 4. If the cell 4 belongs to one cell in the first list that is included in the first list for longest duration, the cell 4 satisfies the condition 5 in the fifth condition.

The terminal device may obtain, in one of the following manners, information for determining the fifth condition.

Manner B1: The network device sends, to the terminal device, the information for determining the fifth condition. Correspondingly, the terminal device receives, from the network device, the information for determining the fifth condition.

The network device may send, to the terminal device during initial access of the terminal device, the information for determining the fifth condition; or may send, to the terminal device after determining the fifth condition based on a status of the terminal device (for example, the height of the terminal device), the information for determining the fifth condition. The following describes how the network device determines the fifth condition based on the status of the terminal device (for example, the height of the terminal device). For example, when the network device determines that a height range of the terminal device is 0 meters to 200 meters, the second signal quality threshold in the fifth condition determined by the network device is a threshold corresponding to the height range.

In a possible design, the information for determining the fifth condition may directly indicate the fifth condition. For example, when the fifth condition includes that signal quality of a cell is less than or equal to the second signal quality threshold, the information for determining the fifth condition may include the second signal quality threshold. For another example, when the fifth condition includes that duration for which a cell is included in the first list is greater than or equal to the third duration threshold, the information for determining the fifth condition may include the third duration threshold.

In another possible design, the information indicating the fifth condition may be information that has a correspondence with the fifth condition. For example, the correspondence between the information indicating the fifth condition and the fifth condition is shown in Table 5. The terminal device and the network device may store the correspondence. When the information indicating the fifth condition is 00, the fifth condition includes that signal quality of a cell is less than or equal to the second signal quality threshold. When the information indicating the fifth condition is 01, the fifth condition includes that duration for which a cell is included in the first list is greater than or equal to the third duration threshold. When the information indicating the fifth condition is 10, the fifth condition includes that signal quality of a cell is less than or equal to the first signal quality threshold, and duration for which the cell is included in the first list is greater than or equal to the third duration threshold.

**Table 5**

| Information indicating the fifth condition | Fifth condition |
|---|---|
| 00 | Signal quality of a cell is less than or equal to the second signal quality threshold |
| 01 | Duration for which a cell is included in the first list is greater than or equal to the third duration threshold |
| 10 | Signal quality of a cell is less than or equal to the second signal quality threshold; and duration for which the cell is included in the first list is greater than or equal to the third duration threshold |

The information for determining the fifth condition and the information indicating the correspondence may be carried in different messages, or may be carried in a same message. This is not limited in this application. In addition, a sequence of obtaining the information for determining the fifth condition and the information indicating the correspondence is not limited in this application.

Manner B2: The terminal device obtains stored information for determining the fifth condition.

For specific content of the information for determining the fifth condition, refer to manner B1. Details are not described herein again.

The information that is stored in the terminal device and that is used to determine the fifth condition may be preset, or may be determined by the terminal device. When the terminal device determines the information for determining the fifth condition, the terminal device may determine the fifth condition based on the status of the terminal device (for example, the height of the terminal device). For a determining manner, refer to the manner in which the network device determines the fifth condition in manner B1. Details are not described herein again.

In the implementation B1, the terminal device may delete the part or all of the cells in the first list based on the signal quality of each cell in the first list and/or the duration for which each cell in the first list is included in the first list, so that validity of information in the first list can be improved.

Implementation B2: After changing the quantity of triggering cells from the first value to the second value, the terminal device may delete all of the cells in the first list by default. In this case, the terminal device does not need to delete all of the cells in the first list based on signal quality of each cell in the first list and/or duration for which each cell in the first list is included in the first list, thereby reducing energy consumption of the terminal device.

Optionally, in the implementation B2, the terminal device may further retain identification information of each cell in the first list. For example (which is referred to as example 3 below), before the terminal device changes the quantity of triggering cells from the first value to the second value, the first list includes identifiers of a cell 1 to a cell 3. After the terminal device changes the quantity of triggering cells from the first value to the second value, the terminal device may clear the first list, and retain the identifiers of the cell 1 to the cell 3 in the terminal device.

Optionally, after retaining the identification information of each cell in the first list, the terminal device may preferentially measure a cell in the first list based on the identification information of each cell in the first list. For example, based on example 3, if the terminal device can measure the cell 1 to a cell 8, after retaining the identifiers of the cell 1 to the cell 3, the terminal device may first measure the cell 1 to the cell 3, and then measure the cell 4 to the cell 8.

In addition, when deleting one or more cells in the first list, the terminal device may further delete measurement information of the one or more cells. For example, before the terminal device changes the quantity of triggering cells from the first value to the second value, the first list includes identifiers of a cell 1 to a cell 3, and the terminal device stores measurement information of the cell 1 to the cell 3. In the implementation B1, if the terminal device deletes the identifier of the cell 1 in the first list after the terminal device changes the quantity of triggering cells from the first value to the second value, the terminal device may further delete the measurement information of the cell 1. In the implementation B2, if the terminal device deletes the identifiers of the cell 1 to the cell 3 in the first list after the terminal device changes the quantity of triggering cells from the first value to the second value, the terminal device may further delete the measurement information of the cell 1 to the cell 3.

Optionally, the method shown in FIG. 4A further includes the following step.

S404: The terminal device sends a measurement report to the network device based on a new quantity of triggering cells.

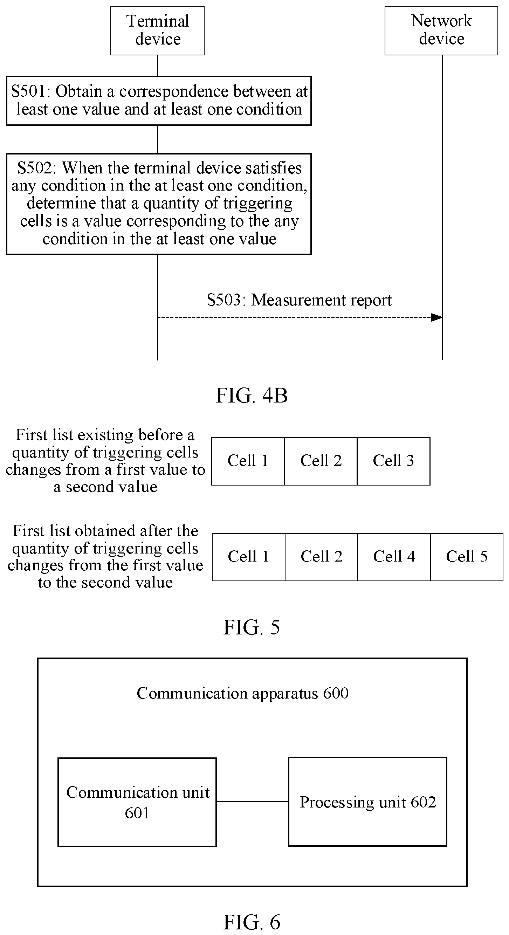

After the terminal device changes the quantity of triggering cells from the first value to the second value, if a quantity of cells in the first list is greater than or equal to the new quantity of triggering cells (that is, the second value), the terminal device may send the measurement report to the network device. For example, as shown in FIG. 5, before the terminal device changes the quantity of triggering cells from the first value to the second value, the quantity of triggering cells is 5, and the first list includes identifiers of a cell 1 to a cell 3. After the terminal device changes the quantity of triggering cells from the first value to the second value, the quantity of triggering cells is 4, and the identifiers of the cell 1 and the cell 2 are retained in the first list. In addition, in subsequent measurement, the terminal device adds identifiers of a cell 4 and a cell 5 to the first list. In this case, the quantity of cells in the first list is equal to the quantity of triggering cells, so that the measurement report may be sent to the network device.

Optionally, the measurement report includes a third indication. The third indication may indicate S cells in the first list, and S is a positive integer. The S cells are cells recorded by the terminal device in the first list based on a second measurement result, and the second measurement result is a measurement result obtained before the terminal device changes the quantity of triggering cells from the first value to the second value. For example, in the example shown in FIG. 5 above, the S cells include the cell 1 and the cell 2, and the third indication may include the identifiers of the cell 1 and the cell 2. According to this method, the terminal device may indicate which cells are recorded in the first list based on a measurement result obtained before the quantity of triggering cells changes from the first value to the second value, so that validity of the measurement report is improved, and the network device can accordingly perform mobility management more effectively.

According to the method shown in FIG. 4A, in a solution, when the terminal device changes the quantity of triggering cells from the first value to the second value, the terminal device may delete the part of the cells in the first list, so that the first list can be effectively managed. In this way, the terminal device does not need to re-measure a retained cell in the first list, so that resources for measuring these cells can be saved, reporting time of a measurement report can be reduced, and a case of too late handover or even radio link interruption can be avoided.

In another solution, when the terminal device changes the quantity of triggering cells from the first value to the second value, the terminal device may delete all of the cells in the first list, so that information related to the first list can be effectively managed. In addition, in this method, an action of the terminal device is aligned with an action of the terminal device performed when the network device reconfigures the quantity of triggering cells, so that the terminal device does not send an invalid measurement result to the network device.

To resolve at least one of the foregoing problems, an embodiment of this application provides another communication method. The method may be applied to the communication system shown in FIG. 1. The following specifically describes a procedure of the method with reference to a flowchart shown in FIG. 4B.

S501: A terminal device obtains a correspondence between at least one value and at least one condition.

For specific content of S501, refer to S401. Details are not described herein again.

S502: When the terminal device satisfies any condition in the at least one condition, the terminal device may determine that a quantity of triggering cells is a value corresponding to the any condition in the at least one value.

For example, the at least one condition includes a condition b1 and a condition b2, the condition b1 is that a height of the terminal device is within a height range 1, and the condition b2 is that the height of the terminal device is within a height range 2. The at least one value includes 3 and 4. The condition b1 corresponds to 3, and the condition b2 corresponds to 4. When the height of the terminal device is within the height range 1, the terminal device may determine that the quantity of triggering cells is 3. When the height of the terminal device is within the height range 2, the terminal device may determine that the quantity of triggering cells is 4.

According to the method shown in FIG. 4B, the terminal device can quickly and accurately determine a quantity of triggering cells suitable for a current scenario based on the correspondence between the at least one condition and the at least one value.

In some possible manners, S502 may include: When the terminal device satisfies a fourth condition in the at least one condition, the terminal device determines that the quantity of triggering cells is a second value. After S502, the method shown in FIG. 4B further includes step A1.

**Step A1:** The terminal device deletes a part or all of cells in a first list, that is, the terminal device deletes one or more cells in the first list. The first list includes a cell that satisfies a trigger condition of a measurement reporting event of the terminal device. For example, the first list is a list of triggered cells.

For specific content of step A1, refer to S403. Details are not described herein again.

Step A1 may have a plurality of implementations, for example, implementation C1 or implementation C2.

**Implementation C1:** After S502, the terminal device may delete the part or all of the cells in the first list. In a solution, when the terminal device determines that the quantity of triggering cells is the second value, the terminal device may delete the part of the cells in the first list, so that the first list can be effectively managed. In this way, the terminal device does not need to re-measure a retained cell in the first list, so that resources for measuring these cells can be saved, reporting time of a measurement report can be reduced, and a case of too late handover or even radio link interruption can be avoided. In another solution, when the terminal device determines that the quantity of triggering cells is the second value, the terminal device may delete all of the cells in the first list, so that information related to the first list can be effectively managed. In addition, in this solution, an action of the terminal device is aligned with an action of the terminal device performed when the network device reconfigures the quantity of triggering cells, so that the terminal device does not send an invalid measurement result to the network device.

Optionally, in the implementation C1, S502 may be replaced with the following: When a condition satisfied by the terminal device changes from a third condition in the at least one condition to a fourth condition in the at least one condition, the terminal device changes the quantity of triggering cells from a first value to a second value. In this case, for specific content of S502, refer to S402. Details are not described herein again.

**Implementation C2:** If a quantity of cells in the first list is less than a first value, and the quantity of cells in the first list is greater than or equal to the second value, the terminal device may delete the part or all of the cells in the first list. The first value is a value of the quantity of triggering cells before the quantity of triggering cells is determined as the second value. For example, the first value is 4, and the second value is 3. That is, before it is determined that the quantity of triggering cells is 3, the quantity of triggering cells is 4, and after it is determined that the quantity of triggering cells is 3, the quantity of triggering cells is 3. If the quantity of cells in the first list is 3, after determining that the quantity of triggering cells is 3, the terminal device may delete the part or all of the cells in the first list.

Optionally, in the implementation C2, if the quantity of cells in the first list is greater than or equal to the first value, and/or the quantity of cells in the first list is less than the second value, the terminal device may retain a cell in the first list, that is, retain all of the cells in the first list. For example, the first value is 4, and the second value is 3. If the quantity of cells in the first list is 5, after determining that the quantity of triggering cells is 3, the terminal device may retain all of the cells in the first list. For another example, the first value is 4, and the second value is 3. If the quantity of cells in the first list is 2, after determining that the quantity of triggering cells is 3, the terminal device may retain all of the cells in the first list. For another example, the first value is 3, and the second value is 5. If the quantity of cells in the first list is 4, after determining that the quantity of triggering cells is 5, the terminal device may retain all of the cells in the first list.

When the quantity of triggering cells changes, so that the quantity of cells in the first list changes from being less than the quantity of triggering cells to being greater than or equal to the quantity of triggering cells, if the quantity of cells in the first list does not change, the terminal device does not send a measurement report for a cell in the first cell list. In the implementation C2, when the quantity of triggering cells changes, so that the quantity of cells in the first list changes from being less than the quantity of triggering cells to being greater than or equal to the quantity of triggering cells, the terminal device may delete the part or all of the cells in the first list. In this way, when a condition for triggering sending of a measurement report is satisfied, the terminal device may send the measurement report in a timely manner.

In some other possible manners, S502 may include: When the terminal device satisfies a fourth condition in the at least one condition, the terminal device determines that the quantity of triggering cells is a second value. After S502, the method shown in FIG. 4B further includes step B1.

**Step B1:** The terminal device retains a cell in a first list, for example, retains all of cells in the first list. The first list includes a cell that satisfies a trigger condition of a measurement reporting event of the terminal device. For example, the first list is a list of triggered cells.

Step B1 may have a plurality of implementations, for example, implementation D1 or implementation D2.

**Implementation D1:** After S502, the terminal device may retain the cell in the first list. Optionally, in the implementation D1, S502 may be replaced with the following: When a condition satisfied by the terminal device changes from a third condition in the at least one condition to a fourth condition in the at least one condition, the terminal device changes the quantity of triggering cells from a first value to a second value. In this case, for specific content of S502, refer to S402. Details are not described herein again.

**Implementation D2:** If a quantity of cells in the first list is greater than or equal to a first value, and the quantity of cells in the first list is greater than or equal to the second value, the terminal device retains the cell in the first list. The first value is a value of the quantity of triggering cells before the quantity of triggering cells is determined as the second value. For example, the first value is 2, and the second value is 3. That is, before it is determined that the quantity of triggering cells is 3, the quantity of triggering cells is 2, and after it is determined that the quantity of triggering cells is 3, the quantity of triggering cells is 3. If the quantity of cells in the first list is 4, after determining that the quantity of triggering cells is 3, the terminal device may retain the cell in the first list.

Optionally, in the implementation D2, if the quantity of cells in the first list is less than the first value, and/or the quantity of cells in the first list is less than the second value, the terminal device may delete a part or all of the cells in the first list. For specific content of deleting, by the terminal device, the part or all of the cells in the first list, refer to S403. Details are not described herein again. For example, the first value is 2, and the second value is 3. If the quantity of cells in the first list is 1, after determining that the quantity of triggering cells is 3, the terminal device may delete the part or all of the cells in the first list. For another example, the first value is 2, and the second value is 3. If the quantity of cells in the first list is 2, after determining that the quantity of triggering cells is 3, the terminal device may delete the part or all of the cells in the first list. For another example, the first value is 3, and the second value is 2. If the quantity of cells in the first list is 2, after determining that the quantity of triggering cells is 2, the terminal device may delete the part or all of the cells in the first list.

When the quantity of triggering cells changes, so that the quantity of cells in the first list is greater than or equal to the quantity of triggering cells after the change, if the quantity of cells in the first list is greater than or equal to the quantity of triggering cells before the change, the terminal device has sent a measurement report for the cell in the first list before the quantity of triggering cells changes. In this case, if the terminal device deletes a part or all of cells in the first list after the quantity of triggering cells changes, the terminal device may further need to send a measurement report for the cell in the first list, thereby causing repeated reporting. In the implementation D2, when the quantity of triggering cells changes, so that the quantity of cells in the first list is greater than or equal to the quantity of triggering cells after the change, if the quantity of cells in the first list is greater than or equal to the quantity of triggering cells before the change, the terminal device may retain the cell in the first list. In this way, the terminal device does not send a measurement report again for the cell in the first list, so that repeated reporting can be avoided.

Optionally, the method shown in FIG. 4B further includes the following step.

**S503:** The terminal device sends a measurement report to the network device based on a new quantity of triggering cells.

For specific content of S503, refer to S404. Details are not described herein again.

Based on a same technical concept as the method embodiment in FIG. 2, FIG. 4A, or FIG. 4B, an embodiment of this application provides a communication apparatus in FIG. 6, which may be configured to perform a function of a related step in the foregoing method embodiment. The function may be implemented by hardware, or may be implemented by software or by hardware executing corresponding software. The hardware or the software includes one or more modules corresponding to the foregoing function. A structure of the communication apparatus is shown in FIG. 6, and includes a communication unit 601 and a processing unit 602. The communication apparatus 600 may be used in the terminal device or the network device in the communication system shown in FIG. 1, and may implement the communication method provided in the foregoing embodiments and examples of this application. Functions of the units in the communication apparatus 600 are described below.

The communication unit 601 is configured to receive and send data. The communication unit 601 may be implemented by using a transceiver, for example, a mobile communication module. The mobile communication module may include at least one antenna, at least one filter, a switch, a power amplifier, a low noise amplifier (low noise amplifier, LNA), and the like.

The processing unit 602 may be configured to support the communication apparatus 600 in performing processing actions in the foregoing method embodiments. The processing unit 602 may be implemented by using a processor. For example, the processor may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor, or may be any conventional processor or the like.

In an implementation, the communication apparatus 600 is used in the terminal device in the embodiment of this application shown in FIG. 2. The following describes a specific function of the processing unit 602 in this implementation.

The processing unit 602 is configured to: receive first information from a network device through the communication unit 601, where the first information is used to reconfigure a trigger condition of a measurement reporting event of the terminal device; and after the trigger condition is reconfigured based on the first information, retain a part or all of cells in a first list, or retain identification information of each cell in the first list, where the first list includes a cell that satisfies the trigger condition.

The following describes a solution in which the processing unit 602 "retains the part or all of the cells in the first list".

Optionally, the processing unit 602 is specifically configured to retain the part or all of the cells in the first list based on signal quality of each cell in the first list and/or duration for which each cell in the first list is included in the first list.

Optionally, the processing unit 602 is specifically configured to retain, based on the signal quality of each cell in the first list and/or the duration for which each cell in the first list is included in the first list, a cell that satisfies a first condition in the first list, where the first condition includes at least one of the following:
signal quality of a cell is greater than a first signal quality threshold;
duration for which a cell is included in the first list is less than or equal to a first duration threshold;
duration for which a cell is included in the first list is greater than a second duration threshold;
a cell belongs to N cells with best signal quality in the first list, where N is a positive integer; and
a cell belongs to O cells in the first list that are included in the first list for shortest duration, where O is a positive integer.

In a design, the processing unit 602 is configured to receive, from the network device through the communication unit 601, information for determining the first condition.

The following describes a solution in which the processing unit 602 "retains the identification information of each cell in the first list".

Optionally, the processing unit 602 is further configured to: after retaining the identification information of each cell in the first list, preferentially measure a cell in the first list based on the identification information of each cell in the first list.

Optionally, the processing unit 602 is further configured to send second information to the network device through the communication unit 601, where the second information includes at least one of the following:
information indicating a height of the terminal device;
information indicating a speed of the terminal device;
information indicating a location of the terminal device;
information indicating that an antenna currently used by the terminal device changes;
information indicating that the height of the terminal device is within a first height range;
information indicating that the speed of the terminal device is within a first speed range; and
information indicating that the location of the terminal device is within a first location range.

In an example, the processing unit 602 is further configured to: when the terminal device satisfies a second condition, send the second information to the network device through the communication unit 601, where the second condition includes at least one of the following:
the height of the terminal device is within the first height range;
the speed of the terminal device is within the first speed range;
the location of the terminal device is within the first location range; and
the antenna currently used by the terminal device changes.

Optionally, the processing unit 602 is further configured to receive, from the network device through the communication unit 601, information for determining the second condition.

Optionally, the processing unit 602 is further configured to send a measurement report to the network device based on the trigger condition through the communication unit 601, where the measurement report includes a first indication, the first indication indicates M cells in the first list, M is a positive integer, the M cells are cells recorded by the terminal device in the first list based on a first measurement result, and the first measurement result is a measurement result obtained before the terminal device reconfigures the trigger condition based on the first information.

Optionally, the processing unit 602 is further configured to receive a second indication from the network device through the communication unit 601, where the second indication indicates the terminal device to retain the part or all of the cells in the first list or retain the identification information of each cell in the first list after the terminal device receives the first information.

Optionally, the trigger condition includes a quantity of triggering cells.

In another implementation, the communication apparatus 600 is used in the network device in the embodiment of this application shown in FIG. 2. The following describes a specific function of the processing unit 602 in this implementation.

The processing unit 602 is configured to: send first information to a terminal device through the communication unit 601, where the first information is used to reconfigure a trigger condition of a measurement reporting event of the terminal device; and receive a measurement report from the terminal device through the communication unit 601, where the measurement report includes a first indication, the first indication indicates M cells in a first list, M is a positive integer, the first list includes a cell that satisfies the trigger condition, the M cells are cells recorded by the terminal device in the first list based on a first measurement result, and the first measurement result is a measurement result obtained before the terminal device reconfigures the trigger condition based on the first information.

Optionally, the processing unit 602 is further configured to: receive second information from the terminal device through the communication unit 601; and send the first information to the terminal device based on the second information through the communication unit 601, where the second information includes at least one of the following:
information indicating a height of the terminal device;
information indicating a speed of the terminal device;
information indicating a location of the terminal device;
information indicating that an antenna currently used by the terminal device changes;
information indicating that the height of the terminal device is within a first height range;
information indicating that the speed of the terminal device is within a first speed range; and
information indicating that the location of the terminal device is within a first location range.

Optionally, the processing unit 602 is further configured to send, to the terminal device through the communication unit 601, information for determining a second condition, where the second condition is a condition that is satisfied when the terminal device sends the second information.

For example, the second condition includes at least one of the following:
the height of the terminal device is within the first height range;
the speed of the terminal device is within the first speed range;
the location of the terminal device is within the first location range; and
the antenna currently used by the terminal device changes.

Optionally, the processing unit 602 is further configured to send a second indication to the terminal device through the communication unit 601, where the second indication indicates the terminal device to retain a part or all of cells in the first list or clear the first list and store identification information of each cell in the first list after the terminal device receives the first information.

Optionally, the trigger condition includes a quantity of triggering cells.

In another implementation, the communication apparatus 600 is used in the terminal device in the embodiment of this application shown in FIG. 4A. The following describes a specific function of the processing unit 602 in this implementation.

The processing unit 602 is configured to: obtain a correspondence between at least one value and at least one condition; when a condition satisfied by the terminal device changes from a third condition in the at least one condition to a fourth condition in the at least one condition, change a quantity of triggering cells from a first value to a second value, where the first value is a value corresponding to the third condition in the at least one value, and the second value is a value corresponding to the fourth condition in the at least one value; and delete a part or all of cells in a first list, where the first list includes a cell that satisfies a trigger condition of a measurement reporting event of the terminal device.

Optionally, the processing unit 602 is specifically configured to delete the part or all of the cells in the first list based on signal quality of each cell in the first list and/or duration for which each cell in the first list is included in the first list.

Optionally, the processing unit 602 is specifically configured to delete, based on the signal quality of each cell in the first list and/or the duration for which each cell in the first list is included in the first list, a cell that satisfies a fifth condition in the first list, where the fifth condition includes at least one of the following:
signal quality of a cell is less than or equal to a second signal quality threshold;
duration for which a cell is included in the first list is greater than or equal to a third duration threshold;
duration for which a cell is included in the first list is less than a fourth duration threshold;
a cell belongs to P cells with poorest signal quality in the first list, where P is a positive integer; and
a cell belongs to Q cells in the first list that are included in the first list for longest duration, where Q is a positive integer.

Optionally, the processing unit 602 is further configured to receive, from a network device through the communication unit 601, information for determining the fifth condition.

Optionally, when all of the cells in the first list are deleted, the processing unit 602 is further configured to store identification information of each cell in the first list.

Optionally, the processing unit 602 is further configured to preferentially measure the signal quality of each cell in the first list based on the identification information of each cell in the first list.

Optionally, the processing unit 602 is specifically configured to: receive, from the network device through the communication unit 601, information indicating the correspondence; or obtain preconfigured information indicating the correspondence.

For example, a sixth condition is any condition in the at least one condition, and the sixth condition includes at least one of the following:
a height of the terminal device is within a second height range;
a speed of the terminal device is within a second speed range;
a location of the terminal device is within a second location range; and
an antenna currently used by the terminal device belongs to a first antenna set.

In another implementation, the communication apparatus 600 is used in the terminal device in the embodiment of this application shown in FIG. 4B. The following describes a specific function of the processing unit 602 in this implementation.

The processing unit 602 is configured to: obtain a correspondence between at least one value and at least one condition; and when the terminal device satisfies any condition in the at least one condition, determine that a quantity of triggering cells is a value corresponding to the any condition in the at least one value.

In some possible manners, the processing unit 602 is configured to: when the terminal device satisfies a fourth condition in the at least one condition, determine that the quantity of triggering cells is a second value, where the second value is a value corresponding to the fourth condition in the at least one value; and delete a part or all of cells in a first list, where the first list includes a cell that satisfies a trigger condition of a measurement reporting event of the terminal device.

Optionally, the processing unit 602 is specifically configured to: if a quantity of cells in the first list is less than a first value, and the quantity of cells in the first list is greater than or equal to the second value, delete the part or all of the cells in the first list, where the first value is a value of the quantity of triggering cells before the quantity of triggering cells is determined as the second value.

In some implementations, the processing unit 602 is specifically configured to delete the part or all of the cells in the first list based on signal quality of each cell in the first list and/or duration for which each cell in the first list is included in the first list.

For example, the processing unit 602 is specifically configured to delete, based on the signal quality of each cell in the first list and/or the duration for which each cell in the first list is included in the first list, a cell that satisfies a fifth condition in the first list.

The fifth condition includes at least one of the following:
signal quality of a cell is less than or equal to a second signal quality threshold;
duration for which a cell is included in the first list is greater than or equal to a third duration threshold;
duration for which a cell is included in the first list is less than a fourth duration threshold;
a cell belongs to P cells with poorest signal quality in the first list, where P is a positive integer; and
a cell belongs to Q cells in the first list that are included in the first list for longest duration, where Q is a positive integer.

Optionally, the processing unit 602 is further configured to receive, from a network device through the communication unit 601, information for determining the fifth condition.

In some implementations, when all of the cells in the first list are deleted, the processing unit 602 is further configured to store identification information of each cell in the first list.

Optionally, the processing unit 602 is further configured to preferentially measure the signal quality of each cell in the first list based on the identification information of each cell in the first list.

In some other possible manners, the processing unit 602 is configured to: when the terminal device satisfies a fourth condition in the at least one condition, determine that the quantity of triggering cells is a second value, where the second value is a value corresponding to the fourth condition in the at least one value; and retain a cell in a first list, where the first list includes a cell that satisfies a trigger condition of a measurement reporting event of the terminal device.

For example, the processing unit 602 is specifically configured to: if a quantity of cells in the first list is greater than or equal to a first value, and the quantity of cells in the first list is greater than or equal to the second value, retain the cell in the first list, where the first value is a value of the quantity of triggering cells before the quantity of triggering cells is determined as the second value.

Optionally, the processing unit 602 is specifically configured to: receive, from the network device through the communication unit 601, information indicating the correspondence; or obtain preconfigured information indicating the correspondence.

It should be noted that division into the modules in the foregoing embodiments of this application is an example, and is merely logical function division. During actual implementation, there may be another division manner. In addition, functional units in embodiments of this application may be integrated into one processing unit, or may exist alone physically, or two or more units may be integrated into one unit. The integrated unit may be implemented in a form of hardware, or may be implemented in a form of a software functional unit.

When the integrated unit is implemented in a form of a software functional unit and sold or used as an independent product, the integrated unit may be stored in a computer-readable storage medium. Based on such an understanding, the technical solutions of this application essentially, or the part contributing to the conventional technology, or all or some of the technical solutions may be implemented in a form of a software product. The computer software product is stored in a storage medium and includes several instructions for instructing a computer device (which may be a personal computer, a server, or a network device) or a processor (processor) to perform all or some of the steps of the methods described in embodiments of this application. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

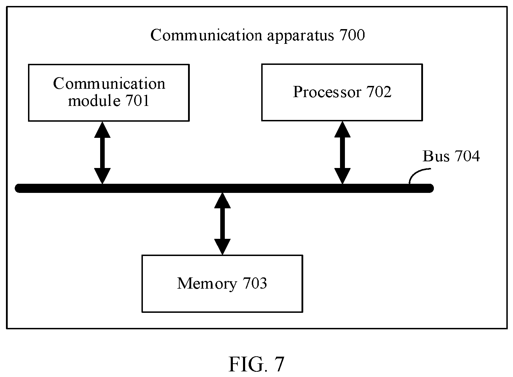

Based on a same technical concept, an embodiment of this application provides a communication apparatus shown in FIG. 7, which may be configured to perform related steps in the foregoing method embodiments. The communication apparatus may be used in the terminal device or the network device in the communication system shown in FIG. 1, may implement the communication method provided in the foregoing embodiments and examples of this application, and has a function of the communication apparatus shown in FIG. 6. Refer to FIG. 7. The communication apparatus 700 includes a communication module 701, a processor 702, and a memory 703. The communication module 701, the processor 702, and the memory 703 are connected to each other.

Optionally, the communication module 701, the processor 702, and the memory 703 are connected to each other by using a bus 704. The bus 704 may be a peripheral component interconnect (peripheral component interconnect, PCI) bus, an extended industry standard architecture (extended industry standard architecture, EISA) bus, or the like. The bus may be classified into an address bus, a data bus, a control bus, or the like. For ease of representation, only one bold line is used for representation in FIG. 7, but this does not mean that there is only one bus or only one type of bus.

The communication module 701 is configured to receive and send data, to implement communication interaction with another device. For example, the communication module 701 may be implemented by using a physical interface, a communication module, a communication interface, or an input/output interface.

The processor 702 may be configured to support the communication apparatus 700 in performing processing actions in the foregoing method embodiments. When the communication apparatus 700 is configured to implement the foregoing method embodiments, the processor 702 may be further configured to implement functions of the foregoing processing unit 602. The processor 702 may be a CPU, or may be another general-purpose processor, a DSP, an ASIC, an FPGA or another programmable logic device, a transistor logic device, a hardware component, or any combination thereof. The general-purpose processor may be a microprocessor, or may be any conventional processor or the like.

In an implementation, the communication apparatus 700 is used in the terminal device in the embodiment of this application shown in FIG. 2. The processor 702 is specifically configured to: receive first information from a network device through the communication module 701, where the first information is used to reconfigure a trigger condition of a measurement reporting event of the terminal device; and after the trigger condition is reconfigured based on the first information, retain a part or all of cells in a first list, or retain identification information of each cell in the first list, where the first list includes a cell that satisfies the trigger condition.

In another implementation, the communication apparatus 700 is used in the network device in the embodiment of this application shown in FIG. 2. The processor 702 is specifically configured to: send first information to a terminal device through the communication module 701, where the first information is used to reconfigure a trigger condition of a measurement reporting event of the terminal device; and receive a measurement report from the terminal device through the communication module 701, where the measurement report includes a first indication, the first indication indicates M cells in a first list, M is a positive integer, the first list includes a cell that satisfies the trigger condition, the M cells are cells recorded by the terminal device in the first list based on a first measurement result, and the first measurement result is a measurement result obtained before the terminal device reconfigures the trigger condition based on the first information.

In another implementation, the communication apparatus 700 is used in the terminal device in the embodiment of this application shown in FIG. 4A. The processor 702 is specifically configured to: obtain a correspondence between at least one value and at least one condition; when a condition satisfied by the terminal device changes from a third condition in the at least one condition to a fourth condition in the at least one condition, change a quantity of triggering cells from a first value to a second value, where the first value is a value corresponding to the third condition in the at least one value, and the second value is a value corresponding to the fourth condition in the at least one value; and delete a part or all of cells in a first list, where the first list includes a cell that satisfies a trigger condition of a measurement reporting event of the terminal device.

In another implementation, the communication apparatus 700 is used in the terminal device in the embodiment of this application shown in FIG. 4B. The processor 702 is specifically configured to: obtain a correspondence between at least one value and at least one condition; and when the terminal device satisfies any condition in the at least one condition, determine that a quantity of triggering cells is a value corresponding to the any condition in the at least one value.

For a specific function of the processor 702, refer to the descriptions in the communication method provided in the foregoing embodiments and examples of this application, and the specific function descriptions of the communication apparatus 600 in the embodiment of this application shown in FIG. 6. Details are not described herein again.

The memory 703 is configured to store program instructions, data, and the like. Specifically, the program instructions may include program code, and the program code includes computer operation instructions. The memory 703 may include a RAM, and may further include a non-volatile memory (non-volatile memory), for example, at least one magnetic disk memory. The processor 702 executes the program instructions stored in the memory 703, and uses the data stored in the memory 703, to implement the foregoing function, so as to implement the communication method provided in the foregoing embodiments of this application.

It may be understood that the memory 703 in FIG. 7 in this application may be a volatile memory or a non-volatile memory, or may include both a volatile memory and a non-volatile memory. The non-volatile memory may be a ROM, a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a RAM, and serves as an external cache. By way of example and not limitation, many forms of RAMs are available, such as a static random access memory (Static RAM, SRAM), a dynamic random access memory (Dynamic RAM, DRAM), a synchronous dynamic random access memory (Synchronous DRAM, SDRAM), double data rate synchronous dynamic random access memory (Double Data Rate SDRAM, DDR SDRAM), an enhanced synchronous dynamic random access memory (Enhanced SDRAM, ESDRAM), a synchlink dynamic random access memory (Synchlink DRAM, SLDRAM), and a direct rambus random access memory (Direct Rambus RAM, DR RAM). It should be noted that the memory for the system and the method described in this specification aims to include but is not limited to these memories and any memory of another appropriate type.

Based on the foregoing embodiments, an embodiment of this application further provides a computer program. When the computer program runs on a computer, the computer is enabled to perform the method provided in the foregoing embodiments.

Based on the foregoing embodiments, an embodiment of this application further provides a computer-readable storage medium. The computer-readable storage medium stores a computer program. When the computer program is executed by a computer, the computer is enabled to perform the method provided in the foregoing embodiments.

The storage medium may be any usable medium that can be accessed by a computer. By way of example and not limitation, the computer-readable medium may include a RAM, a ROM, an EEPROM, a CD-ROM or another optical disk storage, a magnetic disk storage medium or another magnetic storage device, or any other medium that can be used to carry or store expected program code in a form of an instruction or a data structure and that can be accessed by a computer.

Based on the foregoing embodiments, an embodiment of this application further provides a chip. The chip is configured to read a computer program stored in a memory, to implement the method provided in the foregoing embodiments.

Based on the foregoing embodiments, an embodiment of this application provides a chip system. The chip system includes a processor, configured to support a computer apparatus in implementing functions related to devices in the foregoing embodiments. In a possible design, the chip system further includes a memory, and the memory is configured to store a program and data that are necessary for the computer apparatus. The chip system may include a chip, or may include a chip and another discrete component.

In conclusion, embodiments of this application provide a communication method and apparatus. In the method, a terminal device may receive first information from a network device, where the first information is used to reconfigure a trigger condition of a measurement reporting event of the terminal device. After the trigger condition is reconfigured based on the first information, the terminal device may retain a part or all of cells in a first list, or retain identification information of each cell in a first list. According to the method, when the network device reconfigures the trigger condition of the measurement reporting event for the terminal device, the terminal device may retain the part or all of the cells in the first list, or quickly measure a cell in the first list based on a retained identifier of each cell in the first list, so that information related to the first list can be effectively managed, and reporting time of a measurement report can be reduced.

In embodiments of this application, unless otherwise stated or there is a logic conflict, terms and/or descriptions between different embodiments are consistent and may be mutually referenced, and technical features in different embodiments may be combined into a new embodiment based on an internal logical relationship thereof.

A person skilled in the art should understand that embodiments of this application may be provided as a method, a system, or a computer program product. Therefore, this application may be in a form of a hardware-only embodiment, a software-only embodiment, or an embodiment combining software and hardware aspects. In addition, this application may be in a form of a computer program product implemented on one or more computer-usable storage media (including but not limited to a magnetic disk memory, a CD-ROM, an optical memory, and the like) including computer-usable program code.

This application is described with reference to the flowcharts and/or block diagrams of the method, the device (system), and the computer program product according to this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of another programmable data processing device to generate a machine, so that the instructions executed by a computer or a processor of another programmable data processing device generate an apparatus for implementing a specific function in one or more processes in the flowcharts and/or in one or more blocks in the block diagrams.

These computer program instructions may alternatively be stored in a computer-readable memory that can indicate a computer or another programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

These computer program instructions may alternatively be loaded onto a computer or another programmable data processing device, so that a series of operations and steps are performed on the computer or the another programmable device, to generate computer-implemented processing. Therefore, the instructions executed on the computer or the another programmable device provide steps for implementing a specific function in one or more processes in the flowcharts and/or in one or more blocks in the block diagrams.
It is clear that a person skilled in the art may make various modifications and variations to this application without departing from the scope of this application. Thus, this application is intended to cover these modifications and variations, provided that they fall within the scope of the claims of this application and their equivalent technologies.

## Claims

1. A communication method, applied to a terminal device and comprising:
obtaining a correspondence between at least one value and at least one condition; and
when the terminal device satisfies any condition in the at least one condition, determining that a quantity of triggering cells is a value corresponding to the any condition in the at least one value.

2. The method according to claim 1, wherein a sixth condition is any condition in the at least one condition, and the sixth condition comprises: a height of the terminal device is within a second height range.

3. The method according to claim 1 or 2, wherein when the terminal device satisfies the any condition in the at least one condition, determining that the quantity of triggering cells is the value corresponding to the any condition in the at least one value comprises:
when the terminal device satisfies a fourth condition in the at least one condition, determining that the quantity of triggering cells is a second value, wherein the second value is a value corresponding to the fourth condition in the at least one value; and
the method further comprises:
deleting a part or all of cells in a first list, wherein the first list comprises a cell that satisfies a trigger condition of a measurement reporting event of the terminal device.

4. The method according to claim 3, wherein deleting the part or all of the cells in the first list comprises:
if a quantity of cells in the first list is less than a first value, and the quantity of cells in the first list is greater than or equal to the second value, deleting the part or all of the cells in the first list, wherein the first value is a value of the quantity of triggering cells before the quantity of triggering cells is determined as the second value.

5. The method according to claim 3 or 4, wherein deleting the part or all of the cells in the first list comprises:
deleting the part or all of the cells in the first list based on signal quality of each cell in the first list and/or duration for which each cell in the first list is comprised in the first list.

6. The method according to claim 5, wherein deleting the part or all of the cells in the first list based on the signal quality of each cell in the first list and/or the duration for which each cell in the first list is comprised in the first list comprises:
deleting, based on the signal quality of each cell in the first list and/or the duration for which each cell in the first list is comprised in the first list, a cell that satisfies a fifth condition in the first list, wherein
the fifth condition comprises at least one of the following:
signal quality of a cell is less than or equal to a second signal quality threshold;
duration for which a cell is comprised in the first list is greater than or equal to a third duration threshold;
duration for which a cell is comprised in the first list is less than a fourth duration threshold;
a cell belongs to P cells with poorest signal quality in the first list, wherein P is a positive integer; and
a cell belongs to Q cells in the first list that are comprised in the first list for longest duration, wherein Q is a positive integer.

7. The method according to claim 6, further comprising:
receiving, from a network device, information for determining the fifth condition.

8. The method according to any one of claims 3 to 7, wherein when all of the cells in the first list are deleted, the method further comprises:
storing identification information of each cell in the first list.

9. The method according to claim 8, further comprising:
preferentially measuring the signal quality of each cell in the first list based on the identification information of each cell in the first list.

10. The method according to claim 1 or 2, wherein when the terminal device satisfies the any condition in the at least one condition, determining that the quantity of triggering cells is the value corresponding to the any condition in the at least one value comprises:
when the terminal device satisfies a fourth condition in the at least one condition, determining that the quantity of triggering cells is a second value, wherein the second value is a value corresponding to the fourth condition in the at least one value; and
the method further comprises:
retaining a cell in a first list, wherein the first list comprises a cell that satisfies a trigger condition of a measurement reporting event of the terminal device.

11. The method according to claim 10, wherein retaining the cell in the first list comprises:
if a quantity of cells in the first list is greater than or equal to a first value, and the quantity of cells in the first list is greater than or equal to the second value, retaining the cell in the first list, wherein the first value is a value of the quantity of triggering cells before the quantity of triggering cells is determined as the second value.

12. The method according to any one of claims 1 to 11, wherein obtaining the correspondence between the at least one value and the at least one condition comprises:
receiving, from the network device, information indicating the correspondence; or
obtaining preconfigured information indicating the correspondence.

13. A communication apparatus, comprising:
a communication unit, configured to receive and send data; and
a processing unit, configured to perform the method according to any one of claims 1 to 12 through the communication unit.

14. A communication system, comprising a terminal device and a network device, wherein the terminal device is configured to implement the method according to any one of claims 1 to 12.

15. A computer-readable storage medium, wherein the computer-readable storage medium stores a computer program, and when the computer program runs on a computer, the computer is enabled to perform the method according to any one of claims 1 to 12.

16. A chip, wherein the chip is coupled to a memory, and the chip reads a computer program stored in the memory to perform the method according to any one of claims 1 to 12.
